# EUROPÄISCHE PATENTSCHRIFT

(11) **EP 2 932 479 B1**
(45) Veröffentlichungstag und Bekanntmachung des Hinweises auf die Patenterteilung: **30.11.2022**
(21) Anmeldenummer: 13802891.5
(22) Anmeldetag: 11.12.2013
(51) Int. Cl.: G06F 13/40, G06F 13/42, G07D 7/08, G07D 7/121, G07D 7/04, G07D 7/12, G07D 7/187

(54) **SYSTEM UND VERFAHREN ZUR AUSWERTUNG EINES STROMS VON SENSORDATEN FÜR WERTDOKUMENTE**
SYSTEM AND METHOD FOR EVALUATING A STREAM OF SENSOR DATA FOR VALUE DOCUMENTS
SYSTÈME ET PROCÉDÉ D'ÉVALUATION D'UN FLUX DE DONNÉES DE CAPTEURS POUR DES DOCUMENTS DE VALEUR

(30) Priorität: 13.12.2012 DE 102012024397
(43) Veröffentlichungstag der Anmeldung: 21.10.2015
(73) Patentinhaber: Giesecke+Devrient Currency Technology GmbH, 81677 München (DE)
(72) Erfinder: RÖHRL, Wolfgang, 85521 Riemerling (DE); HARTMANN, Oliver, 81827 München (DE)
(74) Vertreter: Giesecke + Devrient IP
(86) Internationale Anmeldenummer: PCT/EP2013/003751
(87) Internationale Veröffentlichungsnummer: WO 2014/090405

(56) Entgegenhaltungen:
- EP-A1- 2 482 256
- EP-A2- 1 575 001
- DE-A1-102009 048 241
- US-A- 4 549 661
- US-A1- 2002 173 874

## Beschreibung

Die vorliegende Erfindung betrifft ein System und ein Verfahren zur Auswertung eines Stroms von Sensordaten, die mittels wenigstens eines Sensors für mehrere Wertdokumente gebildet wurden.

Unter Wertdokumenten werden dabei blattförmige Gegenstände verstanden, die beispielsweise einen monetären Wert oder eine Berechtigung repräsentieren und daher nicht beliebig durch Unbefugte herstellbar sein sollen.

Sie weisen daher nicht einfach herzustellende, insbesondere zu kopierende Merkmale auf, deren Vorhandsein ein Indiz für die Echtheit, d.h. die Herstellung durch eine dazu befugten Stelle, ist. Wichtige Beispiele für solche Wertdokumente sind Coupons, Gutscheine, Schecks und insbesondere Banknoten.

Solche Wertdokumente werden häufig maschinell auf ihre Echtheit und/oder ihren Zustand geprüft. Hierzu dienen Wertdokumentbearbeitungsvorrichtungen, die Sensoren aufweisen, mittels derer physikalische Eigenschaften von Wertdokumenten, beispielsweise optische und/oder magnetische Eigenschaften und/oder Ultraschalleigenschaften erfasst und entsprechende, die Eigenschaften beschreibende Sensordaten gebildet werden. Diese Sensordaten werden in Echtzeit mit vorgegebenen Verfahren ausgewertet, um Eigenschaften der Wertdokumente, beispielsweise den Typ des Wertdokuments, bei Banknoten Währung und Stückelung, die Echtheit, die Verschmutzung oder eine Seriennummer zu ermitteln und/oder die Wertdokumente in Sortierklassen, gemäß derer die Wertdokumente sortiert werden können, einzuordnen.

Moderne Wertdokumentbearbeitungsvorrichtungen für Wertdokumente in Form von Banknoten zeichnen sich durch einen hohen Durchsatz von Banknoten, der über 40 Banknoten/Sekunde liegen kann, und die Verwendung von Sensoren, insbesondere optischen Sensoren, mit hoher Ortsauflösung aus. Durch den hohen Durchsatz und die wegen der hohen Auflösung großen Sensordatenmenge für jedes einzelne Wertdokument kommt es daher zu einem sehr großen Strom von Sensordaten für die Wertdokumente, der in Echtzeit verarbeitet werden muss. Insbesondere steht für jedes einzelne Wertdokument nur eine sehr kurze Zeit zur Auswertung zur Verfügung. Um eine hinreichend schnelle Auswertung zu ermöglichen, ist eine sehr große Rechenleistung notwendig, die allerdings meist nur durch aufwändige und teure Rechner zur Verfügung gestellt werden kann. Ein weiteres Problem besteht darin, dass sich die Anforderungen an die notwendige Rechenleistung je nach Anzahl und Art der Sensoren und der Bearbeitungsgeschwindigkeit ändern können.

US 2002/0173871 A1 beschreibt ein Verfahren und eine Vorrichtung zum Sortieren von Banknoten. Dabei werden Banknoten in eine Eingabe geladen, getrennt und einzeln an Authentifizierungssensoren und einem optischen Scanner vorbeibewegt. Die Sensoren umfassen einen UV-Scanner, einen Magnetsensor, einen Infrarot-Scanner und einen Detektor für Metallfäden. Ein Haupttransportband wirkt mit einem ersten und einem zweiten Sensortransportband zusammen, um die Banknoten durch den Abtastabschnitt und in den Banknotensammelabschnitt zu bewegen. Der Banknotensammelabschnitt enthält mehrere Sammelbehälter, die jeweils einer Weiche zugeordnet sind, die bei Betätigung eine Banknote in den Behälter leitet. Entlang des Transportweges sind mehrere Banknotenverfolgungssensoren angeordnet. Datensignale von den Authentifizierungssensoren und dem optischen Scanner für jede Banknote werden digitalisiert und abwechselnd zu zwei parallelen Datenprozessoren geleitet. Die Prozessorausgaben und die Ausgaben der Verfolgungssensoren werden einer Steuerschaltung zugeführt, die die Weichen der Sammelbehälter betätigt und die Geschwindigkeit des Transportmechanismus regelt.

Der vorliegenden Erfindung liegt daher die Aufgabe zugrunde ein System und Verfahren zur Auswertung eines Stroms von Sensordaten für Wertdokumente zu schaffen, das eine schnelle Auswertung der Sensordaten ermöglicht und einfach zu realisieren ist.

Die Aufgabe wird gelöst durch ein System nach Anspruch 1 zur Auswertung eines Stroms von Sensordaten, die mittels wenigstens eines Sensors für mehrere Wertdokumente gebildet wurden und physikalische Eigenschaften der Wertdokumente beschreiben, vorzugsweise in Echtzeit, das wenigstens zwei Auswerteeinheiten und einen Datenbus aufweist. Bei diesem Auswertesystem weist jede der Auswerteeinheiten eine erste Schnittstelle zum Empfangen des Sensordatenstroms oder eines Teils des Sensordatenstroms mit den Sensordaten, eine zweite Schnittstelle zum Übertragen wenigstens eines Teiles des Sensordatenstroms, eine dritte Schnittstelle zum Empfangen und/oder Übertragen von Auswertedaten, einen Arbeitsspeicher, wenigstens einen mit dem Arbeitsspeicher verbundenen Prozessor zur Auswertung der Sensordaten in dem Arbeitsspeicher, und eine mit der ersten und der zweiten Schnittstelle sowie direkt oder indirekt mit dem Arbeitsspeicher verbundene Weiterleitungseinrichtung zum Empfang eines über die erste Schnittstelle empfangenen Sensordatenstroms, wenigstens teilweise Weiterleitung an die zweite Schnittstelle und die wenigstens teilweise Weiterleitung zu dem Prozessor und/oder zur Speicherung wenigstens eines Teils der Sensordaten des Sensordatenstroms in dem Arbeitsspeicher, auf. Dabei ist jeweils die dritte Schnittstelle mit dem Prozessor und/oder dem Arbeitsspeicher verbunden ist. Weiter ist der Datenbus jeweils mit den dritten Schnittstellen verbunden.

Die Verbindungen sind dabei jeweils Signalverbindungen, die eine Kommunikation zwischen den jeweiligen Komponenten erlauben.

Das erfindungsgemäße Auswertesystem ermöglicht eine wenigstens teilweise parallele Auswertung des Sensordatenstroms in den wenigstens zwei Auswerteeinheiten, wobei nur vergleichsweise einfache Prozessoren verwendet zu werden brauchen und trotzdem eine hohe Verarbeitungsgeschwindigkeit erzielt werden kann. Auf den Einsatz besonders teurer Prozessoren kann verzichtet werden. Die Sensordaten beschreiben dabei physikalische Eigenschaften von Wertdokumenten, beispielsweise die ortsaufgelöste optische Remission einer Seite des Wertdokuments oder die ortsaufgelöste optische Transmission.

Vorzugsweise sind die Auswerteeinheiten so ausgebildet, dass die genannten Schnittstellen, die Weiterleitungseinrichtung, der Arbeitsspeicher und der Prozessor auf nur einer Platine angeordnet sind. Damit ergibt sich ein modularer Aufbau, der eine einfache Auslegung des Auswertesystems ermöglicht.

Das erfindungsgemäße Auswertesystem ermöglicht eine wenigstens teilweise parallele Auswertung des Sensordatenstroms, vorzugsweise in Echtzeit. Der Strom von Sensordaten wird dabei vorzugsweise kein kontinuierlicher Strom sein, sondern entsprechend dem zeitlichen Abstand der Erfassung der Sensordaten, d. h. des zeitlichen Abstands der Wertdokumente an dem wenigstens einen Sensors, Abschnitte mit hoher Datenübertragungsrate und solche mit geringer oder keiner Datenübertragung aufweisen. Dazu sind zunächst die erste und zweite Schnittstelle vorgesehen, bei denen es sich vorzugsweise um Schnittstellen mit großer Bandbreite handelt. Über die erste Schnittstelle kann der Sensordatenstrom empfangen werden. Dieser kann dann von der Weiterleitungseinrichtung wenigstens teilweise, gegebenenfalls unter Vorverarbeitung der Sensordaten an die zweite Schnittstelle weitergeleitet und von dieser an eine nächste Auswerteeinheit weitergeleitet werden. Die Weiterleitungseinrichtung ist aber auch mit dem Arbeitsspeicher verbunden, so dass diese wenigstens einen Teil des empfangenen Sensordatenstroms in dem Arbeitsspeicher speichern kann. Die Weiterleitung der Sensordaten an den Arbeitsspeicher kann dabei direkt oder indirekt erfolgen, d. h. die Weiterleitungseinrichtung kann die Sensordaten direkt in den Arbeitsspeicher schreiben oder unter Einschaltung beispielsweise des Prozessors. Für beide Fälle müssen dann entsprechende Signalverbindungen vorhanden sein. Bevorzugt ist die direkte Verbindung zwischen Weiterleitungseinrichtung und Arbeitsspeicher, die eine direkte Speicherung zulässt, wodurch der Prozessor entlastet wird.

Unter dem Weiterleiten wird dabei verstanden, dass die Sensordaten unverändert der Schnittstelle oder direkt oder indirekt dem Arbeitsspeicher zugeführt werden oder dass diese vorverarbeitet und/oder gefiltert werden. Verschiedene Möglichkeiten werden im Folgenden beschrieben.

Vorzugsweise ist die Weiterleitungseinrichtung programmierbar, so dass das Auswertesystem, wie im Folgenden noch ausgeführt wird, an verschiedene Auswerteaufgaben angepasst werden kann. Insbesondere können verschiedene Weiterleitungseinrichtungen unterschiedlich programmiert sein. Besonders bevorzugt umfasst die Weiterleitungseinrichtung eine programmierbare Logikgatterschaltung, im Englischen auch als FPGA (Field Programmable Gate Array) bezeichnet. Diese Ausführung hat den Vorteil, dass eine sehr große Verarbeitungsgeschwindigkeit ermöglicht wird.

Um eine Steuerung der Weiterleitungseinrichtung zu ermöglichen, ist diese vorzugsweise mit dem Prozessor über eine Steuerverbindung verbunden. Der Prozessor ist dann vorzugsweise dazu ausgebildet und insbesondere dazu programmiert, die Weiterleitungseinrichtung zu steuern. Zur Programmierung ist entsprechender Programmcode in der Auswerteeinrichtung gespeichert, der durch den Prozessor ausgeführt wird. Programmcode im Rahmen der vorliegenden Erfindung umfasst nicht nur Instruktionen eines Programms, sondern kann darüber hinaus auch bei der Ausführung des Programmcodes verwendete, vorgegebene Konfigurationsdaten enthalten.

Der Prozessor dient insbesondere zur Auswertung der Sensordaten in dem Arbeitsspeicher. Die Auswerteeinheit kann dazu in einem Programmspeicher der Auswerteeinheit oder dem Arbeitsspeicher gespeicherten Programmcode aufweisen, bei dessen Ausführung der Prozessor ein durch den Programmcode vorgegebenes Auswerteverfahren unter Verwendung der in dem Arbeitsspeicher der Auswerteeinheit gespeicherten Sensordaten durchführt.

Bei der Auswertung der Sensordaten erzeugt der Prozessor Auswertedaten, die anderen Auswerteeinheiten des Auswertesystems oder wenigstens eine Komponente einer Wertdokumentbearbeitungsvorrichtung, die das Auswertesystem aufweist, verwenden. Zum Übertragen von Auswertedaten und/oder zum Empfangen von Auswertedaten anderer Auswerteeinrichtungen, insbesondere einer anderen Auswerteeinheit des Auswertesystems, dient die dritte Schnittstelle, die mit dem Prozessor und/oder dem Arbeitsspeicher verbunden ist. Beim Empfang von Auswertedaten können diese, je nach Ausführungsform, direkt oder mittels des Prozessors in den Arbeitsspeicher geschrieben werden; es ist jedoch auch möglich, dass diese direkt in dem Prozessor verarbeitet werden. Da die Menge der Auswertedaten typischerweise viel geringer als die der Sensordaten ist, kann die dritte Schnittstelle eine geringere Bandbreite aufweisen als die erste und zweite Schnittstelle.

Die dritten Schnittstellen sind mit dem Datenbus verbunden. Auf diese Weise kann, je nach Auswerteverfahren ein Austausch von Auswertedaten zwischen den Auswerteeinheiten unabhängig von der Weiterleitung der Sensordaten ermöglicht werden. Weiter kann der Datenbus vorzugsweise mit der wenigstens einen Komponente der Wertdokumentbearbeitungsvorrichtung, die das Auswertesystem aufweist, über Datenschnittstellen verbunden sein, um Auswertedaten an diese anderen Komponenten zu liefern oder Daten von diesen zu empfangen.

Zum Betrieb eines mit dem Auswertesystem über die erste Schnittstelle einer der Auswerteeinheiten verbundenen Sensors ist gegebenenfalls eine Steuerung oder Konfiguration des Sensors notwendig. Vorzugsweise weist daher wenigstens eine der Auswerteeinheiten eine vierte, mit dem Prozessor verbundene Schnittstelle zum Übertragen von Steuerdaten an den Sensor auf.

Über den Datenbus können, wie bereits ausgeführt, Auswertedaten zwischen den Auswerteeinheiten ausgetauscht werden. Eine solche Busverbindung kann jedoch für bestimmte Auswerteverfahren zu langsam sein. Es ist aber auch möglich, dass bei bestimmten Auswerteverfahren Auswertedaten zwischen nur zwei Auswerteeinheiten ausgetauscht zu werden brauchen, die zu unnötigem Datenverkehr auf dem Bus führen würden. Es ist daher bevorzugt, dass wenigstens eine der Auswerteeinheiten eine fünfte, mit dem Prozessor und/oder dem Arbeitsspeicher verbundene Schnittstelle zum Empfangen und/oder Übertragen von Auswertedaten aufweist. Durch Verbindung der fünften Schnittstellen kann so ein schneller Austausch von Auswertedaten zwischen den über die fünften Schnittstellen miteinander verbundenen Auswerteeinheiten ermöglicht werden.

Beim Einsatz des Auswertesystems brauchen, je nach Art und Umfang der Sensordaten, nicht alle Schnittstellen verwendet zu werden. Es ist daher bevorzugt, dass bei dem Auswertesystem wenigstens eine der Schnittstellen ein Anschlusselement für eine Steckverbindung aufweist, das vorzugsweise ohne Ausbau der Auswerteeinheiten zugänglich ist. Bei dem Anschlusselement kann es sich insbesondere um einen Stecker oder eine Muffe oder eine Aufnahme für einen komplementären Stecker handeln. Eine Datenverbindung kann dann einfach, auch noch im Nachhinein durch Verbindung von beispielsweise zwei Auswerteeinheiten mittels eines Kabels oder eines Elements mit wenigstens einer optischen Faser mit geeigneten Anschlusselementen hergestellt werden.

Vorzugsweise sind bei dem Auswertesystem die Auswerteeinheiten, gegebenenfalls bis auf darin gespeicherten Programmcode, gleich ausgebildet. Der Programmcode kann gleich oder unterschiedlich sein. Diese Ausführungsform ermöglicht einen einfachen, modularen und kostengünstigen Aufbau des Auswertesystems verbunden mit dem weiteren Vorteil der Skalierbarkeit. Insbesondere können Standard-Prozessoren in einer Standard-Hardware-Umgebung verwendet werden, was Herstellung der Auswerteeinheiten vereinfacht und verbilligt. Darüber hinaus kann das Auswertesystem einfach an unterschiedliche Kundenanforderungen angepasst werden; denn Wertdokumentbearbeitungsvorrichtungen können sich, je nach Kundenanforderung, beispielsweise in ihrer Vereinzelungs- und Transportgeschwindigkeit und damit der Datenrate des Sensordatenstroms und der Art der Auswertung der Sensordaten, beispielsweise mit oder ohne Erkennung der Seriennummer von Banknoten unterscheiden.

Die Schnittstellen können je nach Anzahl der Sensoren und nach Art der Auswertung mit einander verbunden sein. Als Sensoren können insbesondere optische Sensoren zur ortsaufgelösten Erfassung von Remissionseigenschaften von Wertdokumenten im sichtbaren und/oder infraroten Spektralbereich, optische Sensoren zur ortsaufgelösten Erfassung von Transmissionseigenschaften von Wertdokumenten im sichtbaren und/oder infraroten Spektralbereich, Ultraschallsensoren zur ortsaufgelösten Erfassung von Ultraschalleigenschaften von Wertdokumenten verwendet werden bzw. Teil entsprechender, insbesondere im Folgenden beschriebener Sensorsysteme sein. Es können aber auch andere Sensoren, beispielsweise Sensoren zur Erfassung magnetischer Eigenschaften von Wertdokumenten verwendet werden.

Gemäß einer Ausführungsform kann ein Sensorsystem zur Untersuchung von Wertdokumenten mit einem Sensor zur Erfassung von physikalischen Eigenschaften der Wertdokumente und Bildung eines Stroms von Sensordaten, die die physikalische Eigenschaften der Wertdokumente beschreiben, ein erfindungsgemäßes Auswertesystem aufweisen, bei dem der Sensor zur Übertragung des Stroms von Sensordaten mit der ersten Schnittstelle einer ersten der Auswerteeinheiten und die erste Schnittstelle jeweils einer der anderen Auswerteeinheiten mit einer zweiten Schnittstelle einer anderen der Auswerteeinheiten verbunden ist. Die Auswerteeinheiten sind dann in Bezug auf die Übertragung des Sensordatenstroms bzw. von Teilen des Sensordatenstroms über die ersten und zweiten Schnittstellen und die Verbindungen zwischen diesen verkettet. Auf diese Weise kann der Sensordatenstrom über die erste der Auswerteeinheiten empfangen und allein über die Weiterleitungseinrichtung an die folgende oder die folgenden Auswerteeinheiten wenigstens teilweise weitergeleitet werden, wo die Sensordaten vorzugsweise wenigstens teilweise parallel verarbeitet werden können. Gegenstand der Erfindung ist daher auch ein Verfahren mit den Merkmalen des Anspruchs 20 und insbesondere ein erstes Verfahren zum Auswerten eines Stroms von Sensordaten, die mittels wenigstens eines Sensors für mehrere Wertdokumente gebildet wurden und physikalische Eigenschaften der Wertdokumente beschreiben, unter Verwendung von wenigstens zwei Auswerteeinheiten, bei dem der Sensordatenstrom mittels einer ersten der Auswerteeinheiten empfangen wird und der Sensordatenstrom zum einen wenigstens teilweise an eine zweite der Auswerteeinheiten weitergeleitet und zum anderen in der ersten Auswerteeinheit wenigstens teilweise ausgewertet wird, und die zweite Auswerteeinheit den ihr wenigstens teilweise übertragenen Sensordatenstrom wenigstens teilweise parallel zu der Auswertung des Sensordatenstrom in der ersten Auswerteeinheit auswertet.

Verschiedene Ausführungsformen eines solchen Sensorsystems mit einem Sensor erlauben verschiedene Art der Parallelisierung, die je nach Anzahl der Auswerteeinheiten und/oder der Verbindung der Auswerteeinheiten über die ersten und zweiten und/oder fünften Schnittstellen alternativ oder kumulativ möglich sind.

So können wenigstens zwei der Auswerteeinheiten so ausgebildet, vorzugsweise programmiert sein, dass diese bei der Auswertung auf der Basis der Sensordaten des Sensordatenstroms jeweils eine andere Wertdokumenteigenschaft ermitteln, wobei die Wertdokumenteigenschaften vorzugsweise ausgewählt sind aus der Gruppe Verschmutzungsgrad, Beschädigung, Echtheit und einer Wertdokumentkennung, bei Banknoten insbesondere der Seriennummer. Bei Verwendung eines Ultraschallsensors könnte als Wertdokumenteigenschaft auch die Lappigkeit ermittelt werden. Insbesondere kann bei dem ersten Verfahren die erste Auswerteeinheit bei dem Auswerten eine erste Eigenschaft eines Wertdokuments und die zweite Auswerteeinheit eine zweite, von der ersten verschiedene Eigenschaft des Wertdokuments ermitteln, wobei die Wertdokumenteigenschaften vorzugsweise ausgewählt sind aus der Gruppe Verschmutzungsgrad, Beschädigung, Echtheit und Wertdokumentkennung. Bei dieser Art der Parallelisierung verwenden die beiden Auswerteeinheiten dieselben Sensordaten, vorzugsweise desselben Sensors, wozu die Weiterleitungseinrichtung der ersten der Auswerteeinheiten entsprechen ausgebildet, im Fall einer Realisierung als FPGA, programmiert sein kann. Die Programmierung der Prozessoren bzw. der jeweils gespeicherte Programmcode der Auswerteeinheiten wird sich dagegen unterscheiden.

Möglich ist auch ein Sensorsystem zur Erfassung von physikalischen Eigenschaften eines Wertdokuments mit einem ersten Sensor zur Erfassung erster physikalischer Eigenschaften des Wertdokuments, einem zweiten Sensor zur Erfassung zweiter physikalischer Eigenschaften des Wertdokuments, und einem erfindungsgemäßen Auswertesystem, bei dem die erste Schnittstelle einer ersten der Auswerteeinheiten mit dem ersten Sensor zur Übertragung eines ersten Sensordatenstroms mit ersten Sensordaten des ersten Sensors und die erste Schnittstelle einer zweiten der Auswerteeinheiten mit dem zweiten Sensor zur Übertragung eines zweiten Sensordatenstroms mit zweiten Sensordaten des zweiten Sensors verbunden ist, und wenigstens die erste Auswerteeinheit zur wenigstens teilweisen Auswertung der Sensordaten des ersten Sensors und wenigstens die zweite Auswerteeinheit zur wenigstens teilweisen Auswertung der Sensordaten des zweiten Sensors ausgebildet sind. Diese Ausführungsform erlaubt insbesondere die parallele Auswertung der Sensordaten verschiedener Sensoren.

Vorzugsweise können die erste der Auswerteeinheiten und/oder die zweite der Auswerteeinheiten jeweils über die zweite Schnittstelle mit ersten Schnittstellen von gleichen Auswerteeinheiten verbunden sein, die mit ihren dritten Schnittstellen mit dem Datenbus verbunden sind. Unter gleichen Auswerteeinheiten werden dabei Auswerteeinheiten verstanden, die, bis auf Programmcode, wie die erste und zweite der Auswerteeinheiten ausgebildet sein. Damit bilden die erste und/oder zweite der Auswerteeinheiten mit den über die zweiten und ersten Schnittstellen verbundenen Auswerteeinrichtungen Teilsysteme, die selbst erfindungsgemäße Auswertesysteme, insbesondere nach den Ansprüchen 1 bis 6, sind, wobei deren Datenbusse jedoch als ein gemeinsamer Datenbus ausgebildet sind.

Insbesondere können die ersten physikalischen Eigenschaften vorgegebene physikalische Eigenschaften auf einer ersten Seite des Wertdokuments und die zweiten physikalischen Eigenschaften die vorgegebenen physikalischen Eigenschaften auf einer zweiten, der ersten Seite des Wertdokuments gegenüberliegenden Seite sein. Dazu können der erste und der zweite Sensor auf sich gegenüberliegenden Seiten eines Transportpfades angeordnet sein, entlang dessen zu untersuchende Wertdokumente transportiert werden. Man hat dann ein Sensorsystem zur Erfassung von physikalischen Eigenschaften eines Wertdokuments mit einem ersten Sensor zur Erfassung wenigstens einer physikalischen Eigenschaften auf einer ersten Seite des Wertdokuments, einem zweiten Sensor zur Erfassung wenigstens einer physikalischen Eigenschaft auf einer zweiten, der ersten gegenüberliegenden Seite des Wertdokuments, und einem erfindungsgemäßen Auswertesystem, bei dem die erste Schnittstelle einer ersten der Auswerteeinheiten mit dem ersten Sensor zur Übertragung eines ersten Sensordatenstroms mit ersten Sensordaten des ersten Sensors und die erste Schnittstelle einer zweiten der Auswerteeinheiten mit dem zweiten Sensor zur Übertragung eines zweiten Sensordatenstroms mit zweiten Sensordaten des zweiten Sensors verbunden ist, und wenigstens die erste Auswerteeinheit zur wenigstens teilweisen Auswertung der Sensordaten des ersten Sensors und wenigstens die zweite Auswerteeinheit zur wenigstens teilweisen Auswertung der Sensordaten des zweiten Sensors ausgebildet sind.

Gegenstand der Erfindung ist daher auch ein Verfahren mit den Merkmalen des Anspruchs 19 und insbesondere ein zweites Verfahren zum Auswerten eines Stroms von Sensordaten, die mittels wenigstens zweier Sensors für mehrere Wertdokumente gebildet wurden und physikalische Eigenschaften der Wertdokumente beschreiben, unter Verwendung von wenigstens zwei Auswerteeinheiten, bei dem Sensordaten des ersten der Sensoren für das Wertdokument und Sensordaten des zweiten der Sensoren für das Wertdokument in verschiedenen Auswerteeinheiten wenigstens teilweise parallel ausgewertet werden, wobei vorzugsweise die Sensordaten des ersten Sensors Sensordaten für physikalische Eigenschaften auf einer ersten Seite des Wertdokuments und die Sensordaten des zweiten Sensors für physikalische Eigenschaften auf einer zweiten, der ersten Seite gegenüberliegenden Seite des Wertdokuments umfassen, wobei besonders bevorzugt die physikalischen Eigenschaften auf beiden Seiten des Wertdokuments denselben Typ aufweisen, beispielsweise Remissionseigenschaften für optische Strahlung.

Bei dem zweiten Verfahren werten die Auswerteeinheiten Sensordaten für dasselbe Wertdokument wenigstens teilweise parallel aus, bei dem ersten Verfahren ist dies optional. Hierzu können die Auswerteeinheiten entsprechend ausgebildet, vorzugsweise programmiert sein.

Das Sensorsystem kann weiter zwei Teilsysteme aufweisen, von denen ein erstes Teilsystem die erste der Auswerteeinheiten und ein zweites Teilsystem die zweite der Auswerteeinheiten umfasst; wenigstens eines der Teilsysteme kann wenigstens eine weitere Auswerteeinheit aufweisen, deren dritte Schnittstelle mit dem Datenbus verbunden ist und deren erste Schnittstelle mit der zweiten Schnittstelle einer oder der anderen Auswerteeinheit desselben Teilsystems verbunden sein. Diese erste Schnittstelle ist dann nicht direkt mit einem der Sensoren verbunden. Damit ist bei entsprechender Ausbildung der Weiterleitungseinrichtungen eine wenigstens teilweise Weiterleitung des Sensordatenstroms von einer anderen oder der anderen Auswerteeinheit desselben Teilsystems zu der weiteren Auswerteeinheit möglich. Dies erlaubt eine weitere Parallelisierung von Auswertungen.

Weiter kann bei dem Auswertesystem die zweite Schnittstelle zum Empfangen eines Teils des Sensordatenstroms oder eines anderen Sensordatenstroms ausgebildet sein, und die Weiterleitungseinrichtung so ansteuerbar oder programmierbar sein, dass über die zweite Schnittstelle empfangene Sensordaten wenigstens teilweise zu dem Prozessor und/oder zur Speicherung in dem Arbeitsspeicher weitergeleitet werden. Vorzugsweise kann die Weiterleitungseinrichtung hierzu jeweils ein geeignetes, programmierbares FPGA aufweisen. Diese Ausführungsform erlaubt es, wenigstens Teile von Sensordatenströmen zweier Sensoren in einer Auswerteeinheit verarbeiten zu können.

Besonders vorteilhaft ist dann folgende Ausführungsform. Bei dem Sensorsystem, bei dem das Auswertesystem wie in dem letzten Absatz beschrieben ausgebildet ist, kann eine zweite Schnittstelle einer Auswerteeinheit des ersten Teilsystems mit einer zweiten Schnittstelle einer Auswerteeinheit des zweiten Teilsystems verbunden sein, wobei die Weiterleitungseinrichtung der Auswerteeinheit des zweiten Teilsystems zur Weiterleitung von der ersten Schnittstelle empfangener Sensordaten zu dem Prozessor und/oder zur Speicherung wenigstens eines Teils der Sensordaten des Sensordatenstroms in dem Arbeitsspeicher derselben Auswerteeinheit ausgebildet ist. Damit ist eine Verwendung wenigstens eines Teils beider Sensordatenströme in einer Auswerteeinheit möglich, was insbesondere bei großen Datenströmen von Vorteil ist.

Eine weitere Ausführungsform verwendet ebenfalls ein Auswertesystem, das im vorletzten Absatz beschrieben wurde. Ein erfindungsgemäßes Sensorsystem kann einen weiteren Sensor zur Erfassung weiterer physikalischer Eigenschaften des Wertdokuments aufweisen; weiter kann bei dem Sensorsystem das Auswertesystem wie im vorletzten Absatz beschrieben ausgebildet sein, und der weitere Sensor mit der zweiten Schnittstelle einer Auswerteeinheit verbunden sein, wobei die Weiterleitungseinrichtung der Auswerteeinheit zur Weiterleitung von der ersten Schnittstelle empfangener Sensordaten zu dem Prozessor und/oder zur Speicherung wenigstens eines Teils der Sensordaten des Sensordatenstroms in dem Arbeitsspeicher derselben Auswerteeinheit ausgebildet ist. Auf diese Weise kann der Sensordatenstrom des weiteren Sensors mittels einer Auswerteinheit ausgewertet werden, die durch die Verarbeitung wenigstens eines Teils eines anderen Sensordatenstroms nicht voll ausgelastet ist, womit sich eine weitere Möglichkeit zur Parallelverarbeitung ergibt.

Es ist auch möglich, dass das Auswertesystem insgesamt N Teilgruppen mit jeweils wenigstens einer Auswerteeinheit aufweist und dass der Sensordatenstrom nacheinander Sensordaten für aufeinanderfolgende Wertdokumente aufweist, und dass die Auswerteeinheiten so ausgebildet sind, dass die Sensordaten für ein Wertdokument von Auswerteeinheiten jeweils nur einer Teilgruppe ausgewertet werden und vorzugsweise jede Teilgruppe die Sensordaten für um jeweils N Wertdokumente beabstandete Wertdokumente auswertet. Mit anderen Worten wertet eine Teilgruppe von Auswerteeinheiten, die eine oder mehrere der im zuvor beschriebenen Sinne gleich ausgebildeten Auswerteeinheiten aufweist, die Sensordaten für ein Wertdokument und jedes N-te weitere Wertdokument aus, wobei N eine natürliche Zahl größer als 0 ist. Bei dieser Ausführungsform sind die Weiterleitungseinrichtungen so programmiert, dass die die Sensordaten für ein Wertdokument und jedes N-te weitere Wertdokument für eine der Teilgruppen dem bzw. den Arbeitsspeichern der Auswerteeinheit bzw. Auswerteeinheiten der Teilgruppen zuführen. Bei den genannten Verfahren können daher auch eine der Auswerteeinheiten Sensordaten für ein erstes Wertdokument und eine andere der Auswerteeinheiten Sensordaten für ein dem ersten Wertdokument folgendes Wertdokument wenigstens teilweise parallel auswerten.

Wie bereits beschrieben kann es je nach Auswerteverfahren sinnvoll oder sogar notwendig sein, dass eine der Auswerteeinheiten Auswertedaten einer anderen der Auswerteeinheiten verwendet. Bei den Verfahren ist daher bevorzugt, dass eine zweite der Auswerteeinheiten von einer ersten der Auswerteeinheiten ermittelte Auswertedaten erhält und bei der Auswertung verwendet.

So kann bei dem Sensorsystem bei dem wenigstens eine der Auswerteeinheiten und wenigstens eine andere der Auswerteeinheiten so programmiert sind, dass die wenigstens andere der Auswerteeinheiten Auswertedaten von der anderen der Auswerteeinheiten, über den Datenbus erhält. Insbesondere kann die Auswerteeinheit, die über die erste Schnittstelle unmittelbar mit dem Sensor bzw. einem der Sensoren verbunden ist, Auswertedaten, beispielsweise über den Typ des Wertdokuments, bei Banknoten Währung und Stückelung und je nach Währung gegebenenfalls Ausgabe der Banknote, den anderen Auswerteeinheiten zuführen, damit diese die Information über den Typ bei ihrer Auswertung verwenden können. Im Fall der Verwendung von wenigstens zwei Sensoren können auch wenigstens eine der Auswerteeinheiten, die Sensordaten des ersten Sensors erhalten, und wenigstens eine der Auswerteeinheiten, die Sensordaten des zweiten Sensors erhalten, so programmiert sein, dass wenigstens eine der Auswerteeinheiten, die die ersten Sensordaten erhält, Auswertedaten von einer der Auswerteeinheiten, die die zweiten Sensordaten erhält, über den Datenbus erhält.

Insbesondere wenn die Auswertedaten nicht für alle anderen Auswerteeinheiten verwendet werden können oder die Auswertedaten sehr schnell wenigstens einer anderen Auswerteeinheit zur Verfügung gestellt werden müssen, ist es vorteilhaft, dass bei dem Sensorsystem wenigstens eine der Auswerteeinheiten und wenigstens eine andere der Auswerteeinheiten über die fünften Schnittstellen verbunden und so programmiert sind, dass die wenigstens andere der Auswerteeinheiten Auswertedaten von der anderen der Auswerteeinheiten, über die fünften Schnittstellen erhält. Bei Verwendung von zwei Sensoren kann besonders bevorzugt wenigstens eine der Auswerteeinheiten, die Sensordaten des ersten Sensors erhalten, und wenigstens eine der Auswerteeinheiten, die Sensordaten des zweiten Sensors erhalten, über die fünften Schnittstellen verbunden und so programmiert sind, dass wenigstens eine der Auswerteeinheiten, die die ersten Sensordaten erhält, Auswertedaten von einer der Auswerteeinheiten, die die zweiten Sensordaten erhält, über die fünften Schnittstellen erhält. Eine solche Verbindung zwischen den fünften Schnittstellen kann insbesondere über die zuvor beschriebenen Steckverbindungen mittels eines Kabels mit entsprechenden Steckverbinderelementen hergestellt sein.

Die beschriebenen Systeme eignen sich insbesondere zum Einsatz in Wertdokumentbearbeitungsvorrichtungen, die Wertdokumente zur Bearbeitung an wenigstens einem Sensor vorbeitransportieren, wobei ein Sensordatenstrom erzeugt wird. Gegenstand der Erfindung ist daher auch eine Vorrichtung zur Bearbeitung von Wertdokumenten mit einer Zuführeinrichtung zum Zuführen vereinzelter Wertdokumente, einer Ausgabeeinrichtung zur Aufnahme bearbeiteter Wertdokumente, einer Transporteinrichtung zum Transportieren von der Zuführeinrichtung zugeführter, vereinzelter Wertdokumente entlang eines Transportpfades von der Zuführeinrichtung zu der Ausgabeeinrichtung, und einem erfindungsgemäßen Sensorsystem, dessen Sensor oder Sensoren an dem Transport angeordnet sind und das dazu ausgebildet ist, eine Strom von Sensordaten für an dem Sensorsystem vorbeitransportierte Wertdokumente zu erfassen.

Die Erfindung wird im Folgenden noch weiter beispielhaft an Hand der Zeichnungen erläutert. Es zeigen:
- Fig. 1: eine schematische Ansicht einer Wertdokumentbearbeitungsvorrichtung in Form einer Banknotensortiervorrichtung,
- Fig. 2: eine schematische Blockdarstellung eines Sensorsystems der Wertdokumentbearbeitungsvorrichtung in Fig. 1,
- Fig. 3: eine schematische Ansicht eines Abschnitts des Sensorsystems in Fig. 2,
- Fig. 4: eine schematische Blockdarstellung eines zweiten Ausführungsbeispiels für ein Sensorsystem für eine Wertdokumentbearbeitungsvorrichtung, und
- Fig. 5: eine schematische Blockdarstellung eines dritten Ausführungsbeispiels für ein Sensorsystem für eine Wertdokumentbearbeitungsvorrichtung.

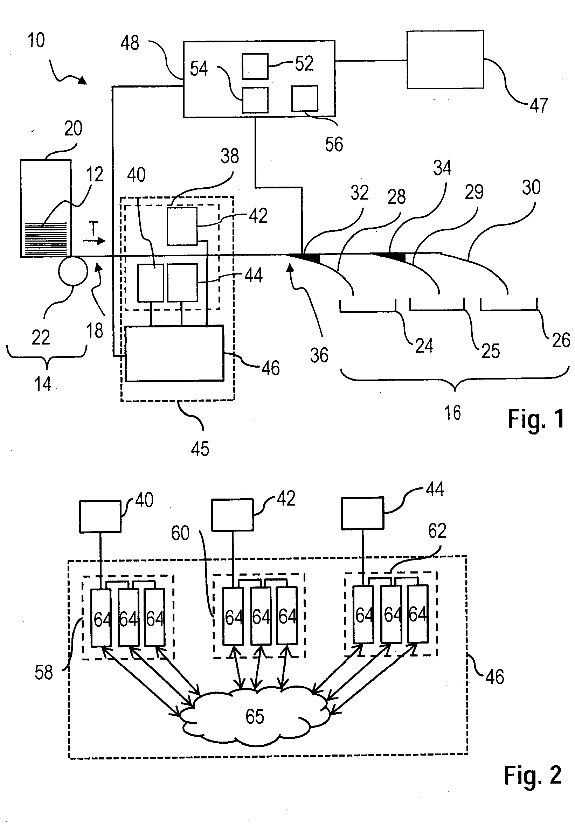

Eine Wertdokumentbearbeitungsvorrichtung 10 in Fig. 1, im Beispiel eine Vorrichtung zur Bearbeitung von Wertdokumenten 12 in Form von Banknoten, ist zur Sortierung von Wertdokumenten in Abhängigkeit von der Erkennung der Echtheit und des Zustands und gegebenenfalls der Währung und Stückelung von bearbeiteten Wertdokumenten ausgebildet.

Die Vorrichtung 10 verfügt in einem oder an einem nicht gezeigten Gehäuse über eine Zuführeinrichtung 14 zur Zuführung von Wertdokumenten, eine Ausgabeeinrichtung 16 zur Aufnahme bearbeiteter, d. h. sortierter Wertdokumente, und eine Transporteinrichtung 18 zum Transportieren von vereinzelten Wertdokumenten von der Zuführeinrichtung 14 zu der Ausgabeeinrichtung 16.

Die Zuführeinrichtung 14 umfasst im Beispiel ein Eingabefach 20 für einen Wertdokumentstapel und einen Vereinzeler 22 zum Vereinzeln von Wertdokumenten aus dem Wertdokumentstapel in dem Eingabefach 20 und zum Zuführen der vereinzelten Wertdokumente zu der Transporteinrichtung 18. Die Ausgabeeinrichtung 16 umfasst im Beispiel drei Ausgabeabschnitte 24, 25 und 26, in die bearbeitete Wertdokumente sortiert nach dem Ergebnis der Bearbeitung sortiert werden können. Im Beispiel umfasst jeder der Abschnitte ein Stapelfach und ein nicht gezeigtes Stapelrad, mittels dessen zugeführte Wertdokumente in dem Stapelfach abgelegt werden können.

Die Transporteinrichtung 18 verfügt über wenigstens zwei, im Beispiel drei Zweige 28, 29 und 30, an deren Enden jeweils einer der Ausgabeabschnitte 24 bzw. 25 bzw. 26 angeordnet ist, und an den Verzweigungen über durch Stellsignale steuerbare Weichen 32 und 34, mittels derer Wertdokumente in Abhängigkeit von Stellsignalen den Zweigen 28 bis 30 und damit den Ausgabeabschnitten 24 bis 26 zuführbar sind.

An einem durch die Transporteinrichtung 18 definierten Transportpfad 36 zwischen der Zuführeinrichtung 14, im Beispiel genauer dem Vereinzeler 22, und der in Transportrichtung ersten Weiche 32 nach dem Vereinzeler 22 ist eine Sensoranordnung 38 angeordnet, die während des Vorbeitransports von Wertdokumenten physikalische Eigenschaften der Wertdokumente misst und die Messergebnisse wiedergebende Sensorsignale bildet In diesem Beispiel verfügt die Sensoreinrichtung 38 über drei Sensoren, nämlich auf sich gegenüberliegenden Seiten des Transportpfades 36 jeweils einen optischen Remissionssensor 40 bzw. 42, der jeweils ein Remissionsfarbbild und ein Remissions-IR-Bild des Wertdokuments erfasst, und einen optischen Transmissionssensor 44, der ein Transmissionsfarbbild und eine Transmissions-IR-Bild des Wertdokuments erfasst. In anderen Ausführungsbeispielen kann noch ein Transmissionsultraschallsensor vorgesehen sein, der ortsaufgelöst Ultraschalltransmissionseigenschaften des Wertdokuments erfasst bzw. misst. Die von den Sensoren gebildeten Sensorsignale entsprechen Sensordaten bzw. Rohdaten der Sensoren, die je nach Sensor bereits einer Korrektur, beispielsweise in Abhängigkeit von Kalibrierdaten und/oder Rauscheigenschaften, unterzogen worden sein können.

Die Sensoren 40, 42 und 44 sind Teil eines Sensorsystems 45, das ein im Folgenden noch näher beschriebenes, über Datenverbindungen mit den Sensoren verbundenes Auswertesystem 46 aufweist. Die Datenverbindungen sind im Ausführungsbeispiel unter Verwendung von LVDS (Low Voltage Differential Signalling) in Verbindung mit Camera Link ausgeführt.

Zur Anzeige von Bedienungs- und Betriebsdaten verfügt die Wertdokumentbearbeitungsvorrichtung 10 über eine Anzeigeeinrichtung 47, die im Beispiel durch eine berührungsempfindliche Anzeigeeinrichtung ("touch screen") realisiert ist Die Anzeigeeinrichtung 47 dient daher als Ein- / Ausgabeeinrichtung der Vorrichtung.

Eine Steuereinrichtung 48 ist über Signalverbindungen mit dem Sensorsystem 45, der Anzeigeeinrichtung 47 und der Transporteinrichtung 18, insbesondere den Weichen 32 und 34, verbunden.

Die Wertdokumentbearbeitungsvorrichtung 10 ist dazu ausgebildet, Wertdokumente in Abhängigkeit von deren Zustand bzw. Qualität und deren Echtheit und gegebenenfalls deren Währung und Stückelung zu sortieren. Insbesondere sind hierfür das Auswertesystem 46 und die Steuereinrichtung 48 entsprechend ausgebildet.

Zum Sortieren werden Wertdokumente aus der Zuführeinrichtung 14 vereinzelt und an der Sensoranordnung 38 vorbei bzw. durch diese hindurch transportiert. Die Sensoranordnung 38 erfasst bzw. misst physikalische Eigenschaften des jeweils an ihr vorbei bzw. durch sie hindurch transportierten Wertdokumente und bildet Sensorsignale bzw. einen Strom von Sensordaten, die die Messwerte für die physikalischen Eigenschaften beschreiben. Die Auswerteeinrichtung 46 und die Steuereinrichtung 48 klassifizieren in Abhängigkeit von den Sensorsignalen der Sensoreinrichtung 38 für ein Wertdokument und von in der Auswerteeinrichtung gespeicherten Klassifizierungsparametern das Wertdokument in eine von vorgegebenen Echtheitsklassen und eine von vorgegebenen Zustandsklassen; die Steuereinrichtung 48 steuert durch Abgabe von Stellsignalen die Transporteinrichtung 18, hier genauer die Weichen 32 bzw. 34 so an, dass das Wertdokument entsprechend seiner bei der Klassifizierung ermittelten Klasse in einen der Klasse zugeordneten Ausgabeabschnitt der Ausgabeeinrichtung 16 ausgegeben wird. Die Zuordnung zu einer der vorgegebenen Echtheits- bzw. Zustandsklassen bzw. die Klassifizierung erfolgt dabei in Abhängigkeit von wenigstens einem vorgegebenen Echtheits- bzw. Zustandskriterium.

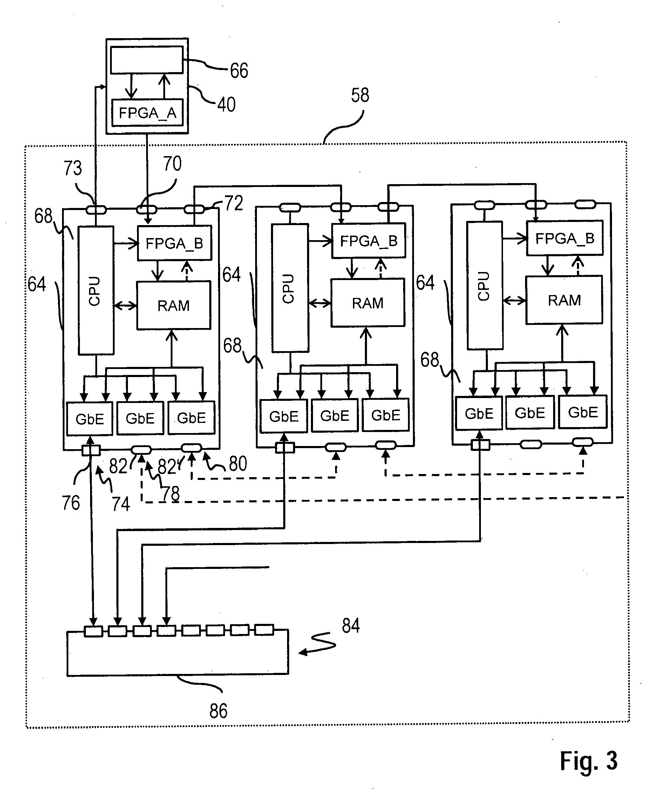

Das Sensorsystem 45 ist in den Figuren 2 und 3 genauer gezeigt. Wie schon ausgeführt sind die Sensoren 40, 42 und 44 Remissions- bzw. Transmissionssensoren, wobei im vorliegenden Ausführungsbeispiel eine in den Figuren nicht gezeigte Beleuchtung des Remissionssensors 42 auch als Beleuchtung des Transmissionssensors 44 dient. Das Auswertesystem 46 verfügt über drei Teilsysteme 58, 60 und 62 sowie Kommunikationseinrichtungen 64. Das Teilsystem 58 ist mit dem Remissionssensor 40, das Teilsystem 60 mit dem Remissionssensor 42 und das Teilsystem 62 mit dem Transmissionssensor 44 über jeweils eine Datenverbindung verbunden. Die Teilsysteme verfügen über jeweils wenigstens eine Auswerteeinheit, im Beispiel jeweils drei Auswerteeinheiten 64, die bis auf darin gespeicherte Daten und darin gespeicherten Programmcode gleich ausgebildet sind. Die Auswerteeinheiten eines jeden der Teilsysteme sind jeweils über Datenverbindungen mit großer Bandbreite mit einander verbunden, so dass ein von dem jeweiligen Sensor erzeugter Sensordatenstrom an alle Auswerteeinheiten des jeweiligen Teilsystems weitergeleitet werden kann. Darüber hinaus sind die Auswerteeinrichtungen über Kommunikationseinrichtungen 65 miteinander verbunden, um Daten untereinander austauschen zu können.

Die Sensoren 40, 42 und 44 sind bezüglich der Erfassung optischer Strahlung analog aufgebaut, so dass es genügt den Kamerateil nur eines der Sensoren und den Aufbau des entsprechenden Teilsystems des Auswertesystems zu beschreiben.

Hier sei auf Fig. 3 verwiesen, in der optional vorhandene Datenverbindungen gestrichelt dargestellt sind. Weiter stellen Datenverbindungen, die in Fig. 3 nicht an einer Schnittstelle enden, Verbindungen zu Auswerteeinheiten anderer Teilsysteme dar.

Wie in Fig. 3 grob schematisch gezeigt, besitzen die Sensoren genauer einen Bilddaten-Aufnehmer 66, der im Beispiel eine Optik, eine Zeilenkamera und weitere Signalelektronik umfasst, und ein FPGA FPGA_A. Das FPGA ist zur Steuerung des Bilddaten-Aufnehmers 66 und zum Senden eines formatierten Sensordatenstroms mit Sensordaten, die erfasste Bilder beschreiben, zu den Auswerteeinheiten ausgebildet. Optional kann das FPGA auch für weitere Aufgaben ausgebildet sein, beispielsweise eine Vorverarbeitung der Rohdaten oder eine Markierung von Objekten im Datenstrom. Der Sensor wird von einer der Auswerteeinheiten des jeweiligen Teilsystems gesteuert und besitzt hierzu eine entsprechende Datenschnittstelle.

Da die Auswerteeinheiten wie oben beschrieben bis auf ihre Programmierung gleich sind, wird deren Aufbau nur am Beispiel der in Fig. 3 linken Auswerteeinheit beschrieben.

Die Auswerteeinheiten 64 verfügen auf einer Platine 68 über eine erste Schnittstelle 70 zum Empfangen eines Sensordatenstroms mit Sensordaten, eine zweite Schnittstelle 72 zum Übertragen wenigstens eines Teiles des Sensordatenstroms, einen Arbeitsspeicher RAM und eine mit der ersten und der zweiten Schnittstelle 70 bzw. 72 sowie direkt mit dem Arbeitsspeicher RAM über Datenverbindungen verbundene Weiterleitungseinrichtung FPGA_B zum Empfang eines über die erste Schnittstelle 70 empfangenen Sensordatenstroms, wenigstens teilweise Weiterleitung an die zweite Schnittstelle 72 und die wenigstens teilweise Weiterleitung zur Speicherung wenigstens eines Teils der Daten des Sensordatenstroms in dem Arbeitsspeicher RAM. In diesem Ausführungsbeispiel ist weiter eine Datenverbindung von dem Arbeitsspeicher RAM zu der Weiterleitungseinrichtung FPGA_B vorgesehen, über die die Weiterleitungseinrichtung FPGA_B Daten aus dem Arbeitsspeicher RAM auslesen kann. Die Weiterleitungseinrichtung FPGA_B ist in diesem Ausführungsbeispiel als programmierbare Logikgatter-Schaltung (Field Programmable Gate Array bzw. FPGA) ausgeführt, die je nach Auswerteverfahren programmiert sein kann.

Die ersten und zweiten Schnittstellen 72 umfassen in diesem Ausführungsbeispiel jeweils Anschlusselemente für eine Steckverbindung zu einer geeigneten Datenleitung, im Beispiel ein Kabel zur Verbindung der Weiterleitungseinrichtungen miteinander.

Weiter ist ein mit dem Arbeitsspeicher RAM über eine Datenverbindung verbundenen Prozessor CPU zur Auswertung der Sensordaten in dem Arbeitsspeicher RAM auf der Platine 68 gehalten. Der Prozessor CPU führt Programmcode aus, der in einem in den Figuren nicht gezeigten Speicher gespeichert ist und bei dessen Ausführung durch den Prozessor ein vorgegebenes Auswerteverfahren bzw. ein entsprechender Teil eines Auswerteverfahrens durchgeführt werden.

Der Prozessor CPU ist über eine Datenverbindung mit einer vierten Schnittstelle 73 verbunden, die über eine Steuerdatenverbindung mit dem Sensor 40 verbunden ist, so dass der Prozessor CPU den Sensor steuern kann.

Weiter ist eine dritte Schnittstelle 74 zum Übertragen von Daten, insbesondere Auswertedaten von dem Prozessor CPU und/oder aus dem Arbeitsspeicher RAM und/oder zum Empfangen von Daten, insbesondere Auswertedaten, zur Verwendung durch den Prozessor CPU und/oder zur Speicherung in dem Arbeitsspeicher RAM vorgesehen. Die dritte Schnittstelle 74 ist dazu mit dem Prozessor CPU und dem Arbeitsspeicher RAM über Datenverbindungen verbunden. Die dritte Schnittstelle 74 umfasst in diesem Ausführungsbeispiel ein Gigabit-Netzwerk-Modul GbE und ein Anschlusselement 76 sowie entsprechenden Programmcode.

Die Auswerteeinheit 64 verfügt über zwei fünfte Schnittstellen 78 und 80, die ebenfalls über Datenverbindungen mit dem Prozessor CPU und dem Arbeitsspeicher RAM verbunden sind und dazu dienen, Daten, insbesondere Auswertedaten wie zum Beispiel Zwischenergebnisse von Auswertungen in anderen Auswerteeinheiten zu empfangen oder Daten, insbesondere Auswertedaten, an andere Auswerteeinheiten zu übertragen. Die fünften Schnittstelle 78 und 80 umfassen in diesem Ausführungsbeispiel jeweils eine Gigabit-Netzwerk-Modul GbE und ein Anschlusselement 82 bzw. 82' für eine Steckverbindung, im Beispiel eine Aufnahme für einen Netzwerkstecker eines Gigabit-Ethernet-Kabels, sowie entsprechenden Programmcode. Die fünften Schnittstellen 78 bzw. 80 sind zur Herstellung von Punkt-zu-Punkt-Verbindungen zwischen zwei Auswerteeinheiten vorgesehen. Sie sind, wenn sie durch entsprechende Kabel mit entsprechenden Schnittstellen anderer Auswerteeinheiten 64 verbunden sind, zum Austausch von größeren Datenmengen oder zeitkritischen Datenpaketen zwischen zwei über diese Schnittstellen miteinander verbundenen Auswerteeinheiten vorgesehen und bilden dann einen Teil der Kommunikationseinrichtungen 65.

Das Auswertesystem 45 besitzt weiterhin einen Datenbus 84, der ebenfalls einen Teil der Kommunikationseinrichtungen 65 bildet, und mit der dritten Schnittstelle 74 verbunden ist. Der Datenbus 84 und die dritten Schnittstellen 74 sind so ausgebildet, dass Daten über die dritten Schnittstellen 74 auf den Datenbus geschrieben bzw. von diesem empfangen werden können. Wie den Fig. 2 und 3 zu entnehmen, sind alle Auswerteeinheiten 64 der Teilsysteme an denselben Datenbus 84 angeschlossen, um über diesen Daten austauschen zu können. Alle Auswerteeinheiten, also nicht nur die eines der Teilsysteme, sind daher untereinander durch den Datenbus miteinander verbunden, so dass eine beliebige Querkommunikation zwischen allen Auswerteeinrichtungen möglich ist. Über diesen Datenbus werden vorzugsweise Informationen mit kleinem und mittlerem Datenaufkommen ausgetauscht, beispielsweise Status- und Steuerinformationen sowie Zwischen- oder auch Endergebnisse der Auswertungen.

Weiter ist der Datenbus 84 mit der Steuereinrichtung 48 verbunden, damit Auswerteergebnisse an diese übertragen werden können.

Im vorliegenden Beispiel umfasst der Datenbus 84 einen Gigabit-Ethernet-Switch 86 mit entsprechenden Anschlüssen, die dritten Schnittstellen sind entsprechend ausgebildet.

In diesem Ausführungsbeispiel sind die Auswerteeinheiten in einen nicht gezeigten Baugruppenträger eingeschoben, der auch den Datenbus 84 aufweist. Dadurch kann das Auswertesystem einfach durch Einschieben einer neuen Auswerteeinheit erweitert werden. Die fünften Schnittstellen und vorzugsweise auch die ersten und zweiten Schnittstellen sind so angeordnete, dass Verbindungen zwischen den entsprechenden Schnittstellen verschiedener Auswerteeinheiten allein durch nachträgliches Stecken von Steckverbindern eines Datenkabels hergestellt werden können, ohne dass eine Entfernung der jeweiligen Auswerteeinheiten von dem Baugruppenträger notwendig wäre.

In diesem Ausführungsbeispiel sind die Weiterleitungseinrichtungen FPGA_B und die ersten Schnittstellen so ausgebildet, Sensordatenströme der Sensoren unter Verwendung von LVDS (Low Voltage Differential Signalling) in Verbindung mit Camera Link zu empfangen. Weiter sind die Weiterleitungseinrichtungen FPGA_B dazu ausgebildet, eine über die erste Schnittstelle 70 zugeführten Strom von Sensordaten zu empfangen, zu duplizieren bzw. kopieren und, vorzugsweise praktisch verzögerungsfrei, über die zweite Schnittstelle 72 an eine weitere Auswerteeinheit weiterzuleiten, sofern eine solche mit der zweiten Schnittstelle verbunden ist. Weiter wird der Datenstrom in den Arbeitsspeicher RAM geschrieben. Durch Verbindung jeweils einer zweiten Schnittstelle 72 einer Auswerteeinrichtung mit der ersten Schnittstelle 70 einer anderen Auswerteeinrichtung desselben Teilsystems, beispielsweise mit einem entsprechenden Datenkabel mit Steckverbindern, können so eine beliebige Zahl von gleichartigen Auswerteeinheiten verkettet werden. Die erste Schnittstelle einer ersten der Auswerteeinheiten ist dabei mit dem jeweiligen Sensor über eine Datenverbindung verbunden, so dass deren Weiterleitungseinrichtung den Sensordatenstrom empfangen und wie beschrieben an die anderen Auswerteeinheiten weiterleiten kann. Im Beispiel wird der Strom von Sensordaten von der ersten Auswerteeinheit eines Teilsystems an die beiden anderen Auswerteeinheiten desselben Teilsystems verteilt. Damit können dieselben Bilddaten von mehreren Auswerteeinheiten bzw. deren Prozessoren parallel bearbeitet werden. Die Prozessoren CPU greifen dazu jeweils auf die Sensordaten in dem jeweiligen Arbeitsspeicher RAM zu.

In diesem Ausführungsbeispiel werden die Datenströme der drei Sensoren 40, 42 und 44 jeweils einem mit dem jeweiligen Sensor verbundenen Teilsystem zugeführt, so dass insbesondere eine wenigstens teilweise parallele Auswertung der jeweiligen Sensordaten möglich ist. Genauer sind die Auswerteinheiten so ausgebildet, im Beispiel programmiert, dass die Sensordaten aus dem Sensordatenstrom, die für ein, d. h. hier dasselbe, Wertdokument erfasst wurden, wenigstens teilweise parallel ausgewertet werden.

Insbesondere sind die Auswerteeinrichtungen so ausgebildet, im Beispiel programmiert, dass wenigstens teilweise Sensordaten des Remissionssensors 40 für eine erste Seite eines Wertdokuments und Sensordaten des Remissionssensors 42 für eine zweite, der ersten gegenüberliegenden Seite des Wertdokuments wenigstens teilweise parallel ausgewertet werden können.

Die Auswertung in dem Auswertesystem erfolgt in diesem Ausführungsbeispiel nur teilweise parallel.

Im vorliegenden Ausführungsbeispiel führt beispielsweise die unmittelbar mit dem Remissionssensor 40 verbundene Auswerteeinheit 64 des Teilsystems 58, genauer deren Prozessor CPU, zunächst unter Verwendung der Sensordaten des Sensors 40, also von Bilddaten für die erste Seite des Wertdokuments eine Währungs- und Stückelungserkennung durch, wozu dieser entsprechenden, in der Auswerteeinheit gespeicherten Programmcode ausführt. Wenn diese erfolgt ist, überträgt der Prozessor CPU als Auswertedaten die Währung und die Stückelung beschreibende Daten auf den Datenbus 64, so dass alle Auswerteeinrichtungen, insbesondere auch die der anderen Teilsysteme 60 und 62, diese Ergebnisse weiterverwenden können.

Im vorliegenden Ausführungsbeispiel führt die unmittelbar mit dem Transmissionssensor 44 verbundene Auswerteeinheit 64 des Teilsystems 62, genauer deren Prozessor CPU zunächst unter Verwendung der Sensordaten des Sensors 44 und der Währungs- und Stückelungsdaten, also von Transmissionsbilddaten des Wertdokuments eine Untersuchung des Wertdokuments auf Defekte, im Beispiel Risse, Löcher und wenigstens scheinbar abgerissene Ecken durch, wozu der Prozessor CPU entsprechenden, in der Auswerteeinheit gespeicherten Programmcode ausführt. Wenn diese erfolgt ist, überträgt der Prozessor CPU entsprechende Auswertedaten auf den Datenbus 64, so dass alle Auswerteeinrichtungen, insbesondere auch die der anderen Teilsysteme 58 und 60, diese Ergebnisse weiterverwenden können.

Andere Auswerteeinheiten des Teilsystems 62 werten wenigstens teilweise parallel unter Verwendung der Daten des Testsystems 58 zur Währung und Stückelung das IR-Transmissionsbild und das Transmissionsbild im sichtbaren Bereich auf das Vorhandensein eines Wasserzeichens sowie eines Sicherheitsfadens aus.

Die unmittelbar mit den Sensoren 40 bzw. 42 direkt verbundenen Auswerteeinheiten der Teilsysteme 58 und 60 bzw. deren jeweilige Prozessoren CPU werten die Sensordaten in Bezug auf das Druckbild aus. Dabei werden die Auswertedaten des Teilsystems 62 über den Datenbus 84 empfangen und bei der teilweise parallelen Auswertung berücksichtigt.

Andere Auswerteeinheiten der Teilsysteme 58 und 60 bzw. deren Prozessoren CPU werten die Sensordaten im Hinblick auf das Vorliegen von Flecken aus, wozu sie entsprechenden Programmcode ausführen, der in den Auswerteeinheiten gespeichert ist.

Unter Verwendung der Sensordaten der Bilder der Remissionssensoren 40 und 42 und der Defektdaten ermitteln andere Auswerteeinheiten der Teilsysteme 58 und 60, ob ein Defekt an einer Ecke ein Eselsohr, d. h. eine umgefaltete Ecke, ist die Ecke, beispielsweise durch Abriss, fehlt. Die hierzu notwendigen Daten tauschen sie über deren über eine Datenleitung verbundenen fünften Schnittstellen aus.

Wenigstens teilweise parallel werten Auswerteeinheiten der Teilsysteme 58 und 60 die ihnen in ihren Arbeitsspeichern vorliegenden Sensordaten unter Verwendung von Transmissionsdaten des Teilsystems 62 auf das Vorhandensein von Schmutz hin aus. Die dazu notwendigen größeren Datenmengen werden über Punkt-zu-Punkt-Verbindungen zwischen einer entsprechenden Auswerteeinheit des Teilsystems 62 und einer jeweiligen Auswerteeinheit der Teilsysteme 58 und 60 übertragen. Die Punkt-zu-Punkt-Verbindungen sind mittels der fünften Schnittstellen 78 und 80 der zu verbindenden Auswerteeinheiten unter Verwendung eines eingesteckten Kabels hergestellt.

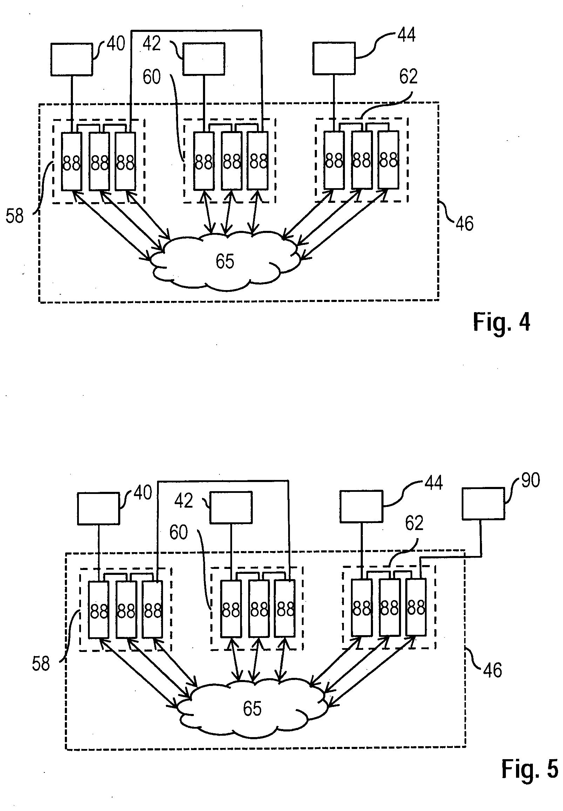

Ein zweites Ausführungsbeispiel in Fig. 4 unterscheidet sich von dem ersten Ausführungsbeispiel dadurch, dass die Auswerteeinheiten 64 durch Auswerteeinheiten 88 ersetzt sind. Die Auswerteeinheiten 88 unterscheiden sich von den Auswerteeinheiten 64 neben der Programmierung dadurch, dass die Schnittstellen 72 auch zum Empfang eines Sensordatenstroms ausgebildet sind und die Weiterleitungseinrichtungen FPGA_B durch Weiterleitungseinrichtungen FPGA_B' ersetzt sind, die nun als FPGAs ausgebildet sind, die so programmierbar sind, dass über die zweite Schnittstelle empfangene Sensordaten wenigstens teilweise zu dem Prozessor und/oder zur Speicherung in dem Arbeitsspeicher weitergeleitet werden. In dem Beispiel in Fig. 4 ist die Weiterleitungseinrichtung der Auswerteeinheit 88 des Teilsystems 64, deren zweite Schnittstelle nicht mit einer Auswerteeinheit 88 desselben Teilsystems verbunden ist, in Fig. 4 die rechte Auswerteeinheit, programmiert, einen Datenstrom von der zweiten Schnittstelle der Auswerteeinheit 88 des Teilsystems 60, die nicht mit der ersten Schnittstelle einer Auswerteeinheit desselben Teilsystems 60 verbunden ist, zu empfangen. Die beiden Schnittstellen sind dazu über eine Datenverbindung verbunden.

Die Weiterleitungseinrichtung der genannten Auswerteeinheit 88 des Teilsystems 60 ist dazu ausgebildet bzw. programmiert, den Sensordatenstrom des Sensors 42 an die genannte Auswerteeinheit 64' des ersten Teilsystems 58 weiterzuleiten.

Diese Auswerteeinheit, die nun Sensordatenströme sowohl des Sensors 40 (über die erste Schnittstelle) als auch des Sensors 42 (über die zweite Schnittstelle) erhält, kann durch entsprechende Programmierung der Weiterleitungseinrichtung Sensordaten beider Ströme in dem Arbeitsspeicher RAM speichern. Die Auswerteeinheit 88 ist durch entsprechende Programmierung des Prozessors CPU dazu ausgebildet, eine Seriennummer einer Banknote auf der Basis der Sensordaten der beiden Sensoren zur Erfassung eines Bildes der Vorder- und der Rückseite der Banknote, d. h. von Bildern der Vorder- und Rückseite zu ermitteln. Andere Auswertungen können wie im ersten Ausführungsbeispiel wenigstens teilweise parallel erfolgen.

Ein drittes Ausführungsbeispiel unterscheidet sich von dem zweiten Ausführungsbeispiel dadurch, dass noch ein vierter Sensor 90, im Beispiel ein ortsauflösender Magnetsensor, vorgesehen ist. Diese ist nun mit der im zweiten Ausführungsbeispiel noch freien zweiten Schnittstelle 72 verbunden. Die Weiterleitungseinrichtung FPGA_B' der mit dem Sensor 90 verbundenen Auswerteeinheit 88 ist so programmiert, das sie den Sensordatenstrom von der zweiten Schnittstelle in den Arbeitsspeicher RAM derselben Auswerteeinheit speichert.

Die Auswerteinheit ist nun so programmiert, dass sie nicht nur einen Teil der Sensordaten des Sensors 44 auswertet, sondern auch die Sensordaten des Sensors 90.

Ein weiteres Ausführungsbeispiel unterscheidet sich von dem ersten Ausführungsbeispiel darin, dass in jedem Teilsystem jede Auswerteeinrichtung die Sensordaten für ein anderes Wertdokument auswertet. So kann beispielsweise die jeweils mit dem Sensor verbundene Auswerteeinheit jedes Teilsystems beginnend mit einem ersten Wertdokument die Sensordaten für jedes folgende dritte Wertdokument auswerten. Mit anderen Worten werten diese ersten Auswerteeinheiten die Sensordaten für das erste, vierte, siebte usw. Wertdokument aus. Die direkt mit den ersten Auswerteeinheiten über die ersten und zweiten Schnittstellen verbundenen nächsten Auswerteeinheiten der Teilsysteme werten die Sensordaten für das zweite, fünfte, achte usw. Wertdokument und die anderen, dritten Auswerteeinheiten die Sensordaten für das dritte, sechste, neunte usw. Wertdokument aus. Im allgemeinen Fall von n Auswerteeinheiten in jedem der Teilsysteme würden sich entsprechende Auswerteeinheiten der Teilsysteme beginnend bei einem Wertdokument die Sensordaten jedes n-ten Wertdokumentes auswerten.

Dabei erfolgt die Auswertung in den Teilsystemen jeweils wenigstens teilweise parallel.

Dazu sind die Weiterleitungseinrichtungen FPGA_B der Auswerteeinheiten der Teilsysteme so programmiert, dass Sensordaten des Stroms selektiv in den Arbeitsspeicher der jeweiligen Auswerteeinheit übertragen werden. Genauer wird jeweils eine der Auswerteeinheiten jedes Teilsystems durch die Ausbildung, hier Programmierung der Weiterleitungseinrichtung, so konfiguriert, dass sie entweder jedes erste, vierte usw. oder nur jedes zweite, fünfte usw. oder nur jedes dritte, sechste usw. Wertdokument auswertet. Eine Kommunikation zwischen den Auswerteeinheiten innerhalb eines Teilsystems über die fünften Schnittstellen ist dann nicht notwendig. Die Datenverbindungen zwischen den Auswerteeinheiten unterschiedlicher Teilsysteme werden jedoch so angepasst, dass jede Auswerteeinheit über die notwendigen Daten der entsprechenden Auswerteeinheit eines anderen Teilsystems verfügen kann. Die im vorhergehenden Ausführungsbeispiel geschilderten Auswertefunktionen der Teilsysteme werden dann auf nur einer jeweiligen Auswerteeinheit des jeweiligen Teilsystems durchgeführt. Während der Auswertung der Sensordaten für ein erstes Wertdokument kann dann schon parallel die Auswertung der Sensordaten für ein direkt folgendes Wertdokument mittels einer anderen Auswerteeinheit beginnen. Die gesamte Zeitspanne zur Durchführung der Auswertung für ein Wertdokument muss so kurz sein, dass nach der Erfassung der Sensordaten für ein Wertdokument und deren Auswertung Weichen der Transporteinrichtung rechtzeitig betätigt werden können.

In weiteren Ausführungsbeispielen kann die Weiterleitungseinrichtung FPGA_B weiter so ausgebildet, im Beispiel programmiert sein, dass sie auch eine weitere Vorverarbeitung der Sensordaten durchführt und/oder eine zusätzliche Bearbeitung von Daten, die bereits im Arbeitsspeicher RAM abgelegt sind, durchführt.

In anderen Ausführungsbeispielen kann beispielsweise nur ein Sensor mit dem entsprechenden Teilsystem vorgesehen sein. Dann können die anderen Teilsysteme entfallen.

In noch anderen Ausführungsbeispielen können die Teilsysteme unterschiedlichen Anzahlen von Auswerteeinheiten aufweisen. Insbesondere braucht ein Teilsystem nur eine Auswerteeinheit aufzuweisen. Die Datenverbindungen zwischen den Teilsystemen bleiben dann gegebenenfalls unverändert.

Noch andere Ausführungsbeispiele unterscheiden sich von den zuvor beschriebenen Ausführungsbeispielen allein dadurch, dass der Datenbus als Datenbus auf der Basis von 10-Gigabit-Ethernet, 40-Gigabit-Ethernet, 100-Gigabit-Ethernet, RapidIO, PCI, PCIe, FireWire, Thunderbolt oder Fibre Channel ausgebildet ist. Die dritten Schnittstellen 74 sind dann entsprechend angepaßt.

Noch weitere Ausführungsbeispiele unterscheiden sich von den zuvor geschilderten Ausführungsbeispielen dadurch, dass die fünften Schnittstellen Basis von 10-Gigabit-Ethernet, 40-Gigabit-Ethernet, 100-Gigabit-Ethernet, RapidIO, PCI, PCIe, FireWire, Thunderbolt oder Fibre Channel ausgebildet sind.

## Patentansprüche

1. System zur Auswertung eines Stroms von Sensordaten, die mittels wenigstens eines Sensors (40, 42, 44) für mehrere Wertdokumente (12) gebildet wurden und physikalische Eigenschaften der Wertdokumente (12) beschreiben, vor-zugsweise in Echtzeit, umfassend wenigstens zwei Auswerteeinheiten (64; 88) und einen Datenbus (84),
wobei jede der Auswerteeinheiten (64; 88)
- eine erste Schnittstelle (70) zum Empfangen des Sensordatenstroms oder eines Teils des Sensordatenstroms mit den Sensordaten,
- eine zweite Schnittstelle (72) zum Übertragen wenigstens eines Teiles des Sensordatenstroms,
- eine dritte Schnittstelle (74) zum Empfangen und/oder Übertragen von Auswertedaten,
- einen Arbeitsspeicher (RAM),
- wenigstens einen mit dem Arbeitsspeicher (RAM) verbundenen Prozessor (CPU) zur Auswertung der Sensordaten in dem Arbeitsspeicher (RAM), und
- eine mit der ersten und der zweiten Schnittstelle (70, 72) sowie direkt oder in-direkt mit dem Arbeitsspeicher (RAM) verbundene Weiterleitungseinrichtung (FPGA_B; FPGA_B') zum Empfang eines über die erste Schnittstelle (70) empfangenen Sensordatenstroms, wenigstens teilweise Weiterleitung an die zweite Schnittstelle (72) und die wenigstens teilweise Weiterleitung zu dem Prozessor (CPU) und/oder zur Speicherung wenigstens eines Teils der Sensordaten des Sensordatenstroms in dem Arbeitsspeicher (RAM), aufweist,
wobei jeweils die dritte Schnittstelle (74) mit dem Prozessor (CPU) und/oder dem Arbeitsspeicher (RAM) verbunden ist, und wobei der Datenbus (84) jeweils mit den dritten Schnittstellen (74) verbunden ist, **dadurch gekennzeichnet, dass** der über die erste Schnittstelle empfangene Sensordatenstrom von der Weiterleitungseinrichtung wenigstens teilweise an die zweite Schnittstelle weitergeleitet und von dieser an eine nächste Auswerteeinheit weitergeleitet werden kann.

2. Auswertesystem nach Anspruch 1, bei der der Prozessor (CPU) mit der Weiterleitungseinrichtung (FPGA_B; FPGA_B') über eine Steuerverbindung verbunden ist, um diese zu steuern.

3. Auswertesystem nach einem der vorhergehenden Ansprüche, bei dem wenigstens eine der Auswerteeinheiten (64; 88) eine vierte, mit dem Prozessor (CPU) verbundene Schnittstelle (73) zum Übertragen von Steuerdaten an einen Sensor (40, 42, 44) aufweist.

4. Auswertesystem nach einem der vorhergehenden Ansprüche, bei dem wenigstens eine der Auswerteeinheiten (64; 88) eine fünfte, mit dem Prozessor (CPU) und/oder dem Arbeitsspeicher (RAM) verbundene Schnittstelle (78, 80) zum Empfangen und/oder Übertragen von Auswertedaten aufweist.

5. Auswertesystem nach einem der vorhergehenden Ansprüche, bei dem wenigstens eine der Schnittstellen (70, 72, 74, 78, 80) ein Anschlusselement für eine Steckverbindung aufweist.

6. Auswertesystem nach einem der vorhergehenden Ansprüche, bei dem die Auswerteeinheiten (64; 88) bis auf darin gespeicherten Programmcode gleich ausgebildet sind.

7. Auswertesystem nach einem der vorhergehenden Ansprüche, bei dem die zweite Schnittstelle (72) zum Empfangen eines Teils des Sensordatenstroms oder eines anderen Sensordatenstroms ausgebildet ist, und die Weiterleitungseinrichtung (FPGA_B; FPGA_B') so ansteuerbar oder programmierbar ist, dass über die zweite Schnittstelle (72) empfangene Sensordaten wenigstens teilweise zu dem Prozessor (CPU) und/oder zur Speicherung in dem Arbeitsspeicher (RAM) weitergeleitet werden.

8. Sensorsystem zur Untersuchung von Wertdokumenten mit einem Sensor (40, 42, 44) zur Erfassung von physikalischen Eigenschaften der Wertdokumente (12) und Bildung eines Stroms von Sensordaten, die die physikalische Eigenschaften der Wertdokumente (12) beschreiben, und einem Auswertesystem (46) nach einem der vorhergehenden Ansprüche, bei dem der Sensor (40, 42, 44) zur Übertragung des Stroms von Sensordaten mit der ersten Schnittstelle (70) einer ersten der Auswerteeinheiten (64; 88) und die erste Schnittstelle (70) jeweils einer der anderen Auswerteeinheiten (64; 88) mit einer zweiten Schnittstelle (72) einer anderen der Auswerteeinheiten (64; 88) verbunden ist.

9. Sensorsystem nach Anspruch 8, bei dem wenigstens zwei der Auswerteeinheiten (64; 88) so ausgebildet, vorzugsweise programmiert sind, dass diese bei dem Auswerten auf der Basis der Sensordaten des Sensordatenstroms jeweils eine andere Wertdokumenteigenschaft ermitteln, wobei die Wertdokumenteigenschaften vorzugsweise ausgewählt sind aus der Gruppe Verschmutzungsgrad, Beschädigung, Echtheit und Wertdokumentkennung.

10. Sensorsystem nach einem der Ansprüche 8 oder 9, bei dem das Auswertesystem (46) insgesamt N Teilgruppen mit jeweils wenigstens einer Auswerteeinheit (64; 88) aufweist und bei dem der Sensordatenstrom nacheinander Sensordaten für aufeinanderfolgende Wertdokumente (12) aufweist,
bei dem die Auswerteeinheiten (64; 88) so ausgebildet sind, dass die Sensordaten für ein Wertdokument (12) von Auswerteeinheiten (64; 88) jeweils nur einer Teilgruppe ausgewertet werden und vorzugsweise jede Teilgruppe die Sensordaten für um jeweils N Wertdokumente beabstandete Wertdokumente (12) auswertet.

11. Sensorsystem zur Erfassung von physikalischen Eigenschaften eines Wertdokuments (12) mit
einem ersten Sensor (40, 42, 44) zur Erfassung erster physikalischer Eigenschaften des Wertdokuments,
einem zweiten Sensor (40, 42, 44) zur Erfassung zweiter physikalischen Eigenschaften des Wertdokuments, und
einem Auswertesystem (46) nach einem der Ansprüche 1 bis 6, bei dem die erste Schnittstelle (70) einer ersten der Auswerteeinheiten (64; 88) mit dem ersten Sensor (40, 42, 44) zur Übertragung eines ersten Sensordatenstroms mit ersten Sensordaten des ersten Sensors (40, 42, 44) und die erste Schnittstelle (70) einer zweiten der Auswerteeinheiten (64; 88) mit dem zweiten Sensor (40, 42, 44) zur Übertragung eines zweiten Sensordatenstroms mit zweiten Sensordaten des zweiten Sensors (40, 42, 44) verbunden ist, und wenigstens die erste Auswerteeinheit (64; 88) zur wenigstens teilweisen Auswertung der Sensordaten des ersten Sensors (40, 42, 44) und wenigstens die zweite Auswerteeinheit (64; 88) zur wenigstens teilweisen Auswertung der Sensordaten des zweiten Sensors (40, 42, 44) ausgebildet sind.

12. Sensorsystem nach Anspruch 11, bei dem die ersten physikalischen Eigenschaften vorgegebenen physikalische Eigenschaften auf einer ersten Seite des Wertdokuments (12) und die zweiten physikalischen Eigenschaften die vorgegebenen physikalischen Eigenschaften auf einer zweiten, der ersten Seite des Wertdokuments (12) gegenüberliegenden Seite sind.

13. Sensorsystem nach Anspruch 11 oder 12, das zwei Teilsysteme (58, 60) aufweist, von denen ein erstes Teilsystem (58) die erste der Auswerteeinheiten (64; 88) und ein zweites Teilsystem (60) die zweite der Auswerteeinheiten (64; 88) umfasst, wobei wenigstens eines der Teilsysteme wenigstens eine weitere Auswerteeinheit (64; 88) aufweist, deren dritte Schnittstelle (74) mit dem Datenbus (84) verbunden ist und deren erste Schnittstelle (70) mit der zweiten Schnittstelle (72) einer anderen oder der anderen Auswerteeinheit (64; 88) desselben Teilsystems verbunden ist.

14. Sensorsystem nach einem der Ansprüche 11 bis 13, bei dem das Auswertesystem (46) nach Anspruch 7 ausgebildet ist, und eine zweite Schnittstelle (72) einer Auswerteeinheit (64; 88) des ersten Teilsystems (58) mit einer zweiten Schnittstelle (72) einer Auswerteeinheit (64; 88) des zweiten Teilsystems (60) verbunden ist, wobei die Weiterleitungseinrichtung (FPGA_B; FPGA_B') der Auswerteeinheit (64; 88) des zweiten Teilsystems (60) zur Weiterleitung von der ersten Schnittstelle (70) empfangener Sensordaten zu dem Prozessor (CPU) und/oder zur Speicherung wenigstens eines Teils der Sensordaten des Sensordatenstroms in dem Arbeitsspeicher (CPU) derselben Auswerteeinheit (64; 88) ausgebildet ist.

15. Sensorsystem nach einem der Ansprüche 8 bis 14, bei dem wenigstens eine der Auswerteeinheiten (64; 88) und wenigstens eine andere der Auswerteeinheiten (64; 88) so programmiert sind, dass die wenigstens andere der Auswerteeinheiten (64; 88) Auswertedaten von der anderen der Auswerteeinheiten (64; 88), über den Datenbus (84) erhält.

16. Sensorsystem nach einem der Ansprüche 8 bis 15, bei dem wenigstens eine der Auswerteeinheiten (64; 88) und wenigstens eine andere der Auswerteeinheiten (64; 88) über die fünften Schnittstellen (78, 80) verbunden und so programmiert sind, dass die wenigstens andere der Auswerteeinheiten (64; 88) Auswertedaten von der anderen der Auswerteeinheiten (64; 88), über die fünften Schnittstellen (78, 80) erhält.

17. Sensorsystem nach einem der Ansprüche 8 bis 13 oder 15 oder 16, das einen weiteren Sensor (40, 42, 44) zur Erfassung weiterer physikalischer Eigenschaften des Wertdokuments aufweist, und bei dem das Auswertesystem (46) nach Anspruch 7 ausgebildet ist, und der weitere Sensor (40, 42, 44) mit der zweiten Schnittstelle (72) einer Auswerteeinheit (64; 88) verbunden ist, wobei die Weiterleitungseinrichtung (FPGA_B; FPGA_B') der Auswerteeinheit (64; 88) zur Weiterleitung von der ersten Schnittstelle (70) empfangener Sensordaten zu dem Prozessor (CPU) und/oder zur Speicherung wenigstens eines Teils der Sensordaten des Sensordatenstroms in dem Arbeitsspeicher (CPU) derselben Auswerteeinheit (64; 88) ausgebildet ist.

18. Vorrichtung zur Bearbeitung von Wertdokumenten (12) mit einer Zuführeinrichtung (14) zum Zuführen vereinzelter Wertdokumente (12),
einer Ausgabeeinrichtung (16) zur Aufnahme bearbeiteter Wertdokumente (12), einer Transporteinrichtung (18) zum Transportieren von der Zuführeinrichtung (14) zugeführter, vereinzelter Wertdokumente (12) entlang eines Transportpfades (36) von der Zuführeinrichtung (14) zu der Ausgabeeinrichtung (16), und
einem Sensorsystem (45) nach einem der Ansprüche 8 bis 17, dessen Sensor oder Sensoren (40, 42, 44) an dem Transportpfad angeordnet sind und das dazu ausgebildet ist, einen Strom von Sensordaten für an dem Sensorsystem (45) vorbeitransportierte Wertdokumente (12) zu erfassen.

19. Verfahren zum Auswerten eines Stroms von Sensordaten mittels
eines Systems zur Auswertung eines Stroms von Sensordaten nach einem der Ansprüche 1 bis 7, bei dem Sensordaten des ersten der Sensoren (40, 42, 44) für ein Wertdokument (12) und Sensordaten des zweiten der Sensoren (40, 42, 44) für das Wertdokument (12) in verschiedenen Auswerteeinheiten (64; 88) wenigstens teilweise parallel ausgewertet werden, wobei vorzugsweise die Sensordaten des ersten Sensors (40, 42, 44) Sensordaten für physikalische Eigenschaften auf einer ersten Seite des Wertdokuments (12) und die Sensordaten des zweiten Sensors (40, 42, 44) Sensordaten für physikalische Eigenschaften auf einer zweiten, der ersten Seite gegenüberliegenden Seite des Wertdokuments (12) umfassen,
wobei die Auswerteeinheiten (64; 88) Sensordaten für dasselbe Wertdokument (12) wenigstens teilweise parallel auswerten.

20. Verfahren zum Auswerten eines Stroms von Sensordaten mittels eines Systems zur Auswertung eines Stroms von Sensordaten nach einem der Ansprüche 1 bis 7, bei dem der Sensordatenstrom mittels einer ersten der Auswerteeinheiten (64; 88) empfangen wird und der empfangene Sensordatenstrom zum einen wenigstens teilweise an eine zweite der Auswerteeinheiten (64; 88) weitergeleitet und zum anderen in der ersten Auswerteeinheit (64; 88) wenigstens teilweise ausgewertet wird, und die zweite Auswerteeinheit (64; 88) den ihr wenigstens teilweise weitergeleiteten Sensordatenstrom wenigstens teilweise parallel zu der Auswertung des Sensordatenstrom in der ersten Auswerteeinheit (64; 88) auswertet.

21. Verfahren nach Anspruch 20, bei dem die erste Auswerteeinheit (64; 88) bei dem Auswerten eine erste Eigenschaft eines Wertdokuments (12) und die zweite Auswerteeinheit (64; 88) eine zweite, von der ersten verschiedene Eigenschaft des Wertdokuments (12) ermitteln, wobei die Wertdokumenteigenschaften vorzugsweise ausgewählt sind aus der Gruppe Verschmutzungsgrad, Beschädigung, Echtheit und Wertdokumentkennung.

22. Verfahren nach einem der Ansprüche 20 bis 21, bei dem die Auswerteeinheiten (64; 88) Sensordaten für dasselbe Wertdokument (12) wenigstens teilweise parallel auswerten.

23. Verfahren nach einem der Ansprüche 19 bis 22, bei dem eine zweite der Auswerteeinheiten von einer ersten der Auswerteeinheiten ermittelte Auswertedaten erhält und bei der Auswertung verwendet.

24. Verfahren nach einem der Ansprüche 20oder 21, bei dem eine der Auswerteeinheiten Sensordaten für ein erstes Wertdokument und eine andere der Auswerteeinheiten Sensordaten für ein dem ersten Wertdokument folgendes Wertdokument wenigstens teilweise parallel auswerten.

## Claims

1. A system for evaluating a stream of sensor data that have been formed by means of at least one sensor (40,42, 44) for a plurality of value documents (12) and describe physical properties of the value documents (12), preferably in real time, comprising at least two evaluation units (64; 88) and a data bus (84), wherein each of the evaluation units (64; 88) has
- a first interface (70) for receiving the sensor data stream or part of the sensor data stream with the sensor data,
- a second interface (72) for transferring at least part of the sensor data stream,
- a third interface (74) for receiving and/or transferring evaluation data,
- a working memory (RAM),
- at least one processor (CPU) connected to the working memory (RAM) for evaluating the sensor data in the working memory (RAM), and
- a relaying device (FPGA_B; FPGA_B') connected to the first and the second interface (70, 72) as well as directly or indirectly to the working memory (RAM) for receiving a sensor data stream received via the first interface (70), at least partial relaying to the second interface (72) and the at least partial relaying to the processor (CPU) and/or for storing at least part of the sensor data of the sensor data stream in the working memory (RAM),
wherein respectively the third interface (74) is connected to the processor (CPU) and/or the working memory (RAM), and wherein the data bus (84)
is respectively connected to the third interfaces (74), **characterized in that** the sensor data stream received via the first interface from the relay device can be relayed by the relaying device at least partly to the second interface, and be relayed by the latter to a next evaluation unit.

2. The evaluation system according to claim 1, wherein the processor (CPU) is connected to the relaying device (FPGA_B; FPGA_B') via a control connection in order to control it.

3. The evaluation system according to any of the previous claims, in which at least one of the evaluation units (64; 88) has a fourth interface (73) connected to the processor (CPU) for transferring control data to a sensor (40, 42, 44).

4. The evaluation system according to any of the previous claims, in which at least one of the evaluation units (64; 88) has a fifth interface (78, 80) connected to the processor (CPU) and/or the working memory (RAM) for receiving and/or transferring evaluation data.

5. The evaluation system according to any of the previous claims, in which at least one of the interfaces (70, 72, 74, 78, 80) has an attachment element for a plug connection.

6. The evaluation system according to any of the previous claims, in which the evaluation units (64; 88) are identically adapted except for program code stored therein.

7. The evaluation system according to any of the previous claims, in which the second interface (72) is adapted for receiving part of the sensor data stream or another sensor data stream, and the relaying device (FPGA_B; FPGA_B') is so actuatable or programmable that sensor data received via the second interface (72) are relayed at least partly to the processor (CPU) and/or for storing in the working memory (RAM).

8. A sensor system for examining value documents having a sensor (40, 42, 44) for capturing physical properties of the value documents (12) and forming a stream of sensor data which describe the physical properties of the value documents (12), and an evaluation system (46) according to any of the previous claims, in which the sensor (40, 42, 44), for transferring the stream of sensor data, is connected to the first interface (70) of a first one of the evaluation units (64; 88), and the first interface (70) of respectively one of the other evaluation units (64; 88) to a second interface (72) of another one of the evaluation units (64; 88).

9. The sensor system according to claim 8, in which at least two of the evaluation units (64; 88) are so adapted, preferably programmed, that they ascertain respectively another value-document property upon evaluating on the basis of the sensor data of the sensor data stream, wherein the value-document properties preferably is selected from the group comprising degree of soiling, damage, authenticity and value-document identifier.

10. The sensor system according to either of claims 8 to 9, in which the evaluation system (46) has altogether N subgroups each with at least one evaluation unit (64; 88), and in which the sensor data stream successively has sensor data for consecutive value documents (12),
in which the evaluation units (64; 88) are so adapted that the sensor data for one value document (12) are evaluated by evaluation units (64; 88) respectively of only one subgroup and preferably each subgroup evaluates the sensor data for value documents spaced respectively by N value documents (12).

11. A sensor system for capturing physical properties of a value document (12) having a first sensor (40, 42, 44) for capturing first physical properties of the value document,
a second sensor (40, 42, 44) for capturing second physical properties of the value document, and
an evaluation system (46) according to any of claims 1 to 6, in which the first interface (70) of a first one of the evaluation units (64; 88) is connected to the first sensor (40, 42, 44) for transferring a first sensor data stream with first sensor data of the first sensor (40, 42, 44), and the first interface (70) of a second one of the evaluation units (64; 88) to the second sensor (40, 42, 44) for transferring a second sensor data stream with second sensor data of the second sensor (40, 42, 44), and at least the first evaluation unit (64; 88) is adapted for at least partly evaluating the sensor data of the first sensor (40, 42, 44), and at least the second evaluation unit (64; 88) for at least partly evaluating the sensor data of the second sensor (40, 42, 44).

12. The sensor system according to claim 11, in which the first physical properties are pre-specified physical properties on a first side of the value document (12), and the second physical properties are the pre-specified physical properties on a second side of the value document (12) opposing the first side.

13. The sensor system according to claim 11 or 12, which has two subsystems (58, 60), with a first subsystem (58) comprising the first one of the evaluation units (64; 88) and a second subsystem (60) the second one of the evaluation units (64; 88), wherein at least one of the subsystems has at least one further evaluation unit (64; 88) whose third interface (74) is connected to the data bus (84) and whose first interface (70) is connected to the second interface (72) of another or the other evaluation unit (64; 88) of the same subsystem.

14. The sensor system according to any of claims 11 to 13, in which the evaluation system (46) is adapted according to claim 7, and a second interface (72) of an evaluation unit (64; 88) of the first subsystem (58) is connected to a second interface (72) of an evaluation unit (64; 88) of the second subsystem (60), wherein the relaying device (FPGA_B; FPGA_B') of the evaluation unit (64; 88) of the second subsystem (60) is adapted for relaying sensor data received from the first interface (70) to the processor (CPU) and/or for storing at least part of the sensor data of the sensor data stream in the working memory (RAM) of the same evaluation unit (64; 88).

15. The sensor system according to any of claims 8 to 14, in which at least one of the evaluation units (64; 88) and at least one other one of the evaluation units (64; 88) are so programmed that the at least other one of the evaluation units (64; 88) receives evaluation data from the other one of the evaluation units (64; 88), via the data bus (84).

16. The sensor system according to any of claims 8 to 15, in which at least one of the evaluation units (64; 88) and at least one other one of the evaluation units (64; 88) are connected via the fifth interfaces (78, 80) and so programmed that the at least other one of the evaluation units (64; 88) receives evaluation data from the other one of the evaluation units (64; 88), via the fifth interfaces (78, 80).

17. The sensor system according to any of claims 8 to 13 or 15 or 16, which has a further sensor (40, 42, 44) for capturing further physical properties of the value document, and in which the evaluation system (46) is adapted according to claim 7, and the further sensor (40, 42, 44) is connected to the second interface (72) of an evaluation unit (64; 88), wherein the relaying device (FPGA_B; FPGA_B') of the evaluation unit (64; 88) is adapted for relaying sensor data received from the first interface (70) to the processor (CPU) and/or for storing at least part of the sensor data of the sensor data stream in the working memory (RAM) of the same evaluation unit (64; 88).

18. An apparatus for processing value documents (12) having
a feeding device (14) for feeding singled value documents (12),
an output device (16) for receiving processed value documents (12), a transport device (18) for transporting singled value documents (12), fed by the feeding device (14), along a transport path (36) from the feeding device (14) to the output device (16), and a sensor system (45) according to any of claims 8 to 17, whose sensor or sensors (40, 42, 44) are disposed on the transport and which is adapted for capturing a stream of sensor data for value documents (12) transported past the sensor system (45).

19. A method for evaluating a current of sensor data by means of a system for evaluating a current of sensor data according to any of claims 1 to 7, in which sensor data of the first one of the sensors (40, 42, 44) for a value document (12) and sensor data of the second one of the sensors (40, 42, 44) for the value document (12) are evaluated in different evaluation units (64; 88) at least partly in parallel, wherein preferably the sensor data of the first sensor (40, 42, 44) comprising sensor data for physical properties on a first side of the value document (12) and the sensor data of the second sensor (40, 42, 44) for physical properties on a second side of the value document (12) opposing the first side. wherein the evaluation units (64; 88) can in particular evaluate sensor data for the same value document (12) at least partly in parallel.

20. A method for evaluating a current of sensor data by means of a system for evaluating a current of sensor data according to any of claims 1 to 7, in which the sensor data stream is received by means of a first of the evaluation units (64; 88) and the received sensor data stream is, on the one hand, relayed at least partly to a second one of the evaluation units (64; 88) and, on the other hand, evaluated in the first evaluation unit (64; 88) at least partly and the second evaluation unit (64; 88) evaluates the sensor data stream at least partly transferred thereto at least partly in parallel with the evaluation of the sensor data stream in the first evaluation unit (64; 88).

21. The method according to claim 20, in which the first evaluation unit (64; 88), upon evaluating, ascertains a first property of a value document (12) and the second evaluation unit (64; 88) a second property of the value document (12) different from the first, wherein the value-document properties preferably is selected from the group comprising degree of soiling, damage, authenticity and value-document identifier.

22. The method according to any of claims 20 to 21, in which the evaluation units (64; 88) evaluate sensor data for the same value document (12) at least partly in parallel.

23. The method according to any of claims 19 to 22, in which a second one of the evaluation units receives evaluation data ascertained by a first one of the evaluation units and employs them upon the evaluation.

24. The method according to any of claims 20 to 21, in which one of the evaluation units evaluates sensor data for a first value document and another one of the evaluation units sensor data for a value document following the first value document, at least partly in parallel.

## Revendications

1. Système d'évaluation d'un flux de données de capteur constituées au moyen d'au moins un capteur (40, 42, 44) pour plusieurs documents de valeur (12) et décrivant des propriétés physiques des documents de valeur (12), de préférence en temps réel, comprenant au moins deux unités d'évaluation (64; 88) et un bus de données (84),
cependant que chacune des unités d'évaluation (64; 88) comporte
- une première interface (70) pour la réception du flux de données de capteur ou d'une partie du flux de données de capteur ayant les données de capteur,
- une deuxième interface (72) pour la transmission d'au moins une partie du flux de données de capteur ayant les données de capteur,
- une troisième interface (74) pour la réception et/ou la transmission de données d'évaluation,
- une mémoire de travail (RAM),
- au moins un processeur (CPU) relié à la mémoire de travail (RAM) pour l'évaluation des données de capteur dans la mémoire de travail (RAM), et
- un équipement de transfert (FPGA B; FPGA_B') relié à la première et à la deuxième interface (70, 72) ainsi que directement ou indirectement à la mémoire de travail (RAM) pour la réception d'un flux de données de capteur reçu par l'intermédiaire de la première interface (70), transfert au moins partiel à la deuxième interface (72) et le transfert au moins partiel au processeur (CPU) et/ou pour la mémorisation d'au moins une partie des données de capteur du flux de données de capteur dans la mémoire de travail (RAM),
cependant que respectivement la troisième interface (74) est reliée au processeur (CPU) et/ou à la mémoire de travail (RAM), et cependant que le bus de données (84) est respectivement relié aux troisièmes interfaces (74), **caractérisé en ce que**
le flux de données de capteur reçu par l'intermédiaire de la première interface est transféré par l'équipement de transfert au moins partiellement à la deuxième interface et peut être transféré par cette dernière à l'unité d'évaluation suivante.

2. Système d'évaluation selon la revendication 1, dans lequel le processeur (CPU) est relié par l'intermédiaire d'une liaison de commande à l'équipement de transfert (FPGA B; FPGA B') afin de commander ce dernier.

3. Système d'évaluation selon une des revendications précédentes, dans lequel au moins une des unités d'évaluation (64; 88) comporte une quatrième interface (73), reliée au processeur (CPU), pour la transmission de données de commande à un capteur (40, 42, 44).

4. Système d'évaluation selon une des revendications précédentes, dans lequel au moins une des unités d'évaluation (64; 88) comporte une cinquième interface (78, 80), reliée au processeur (CPU) et/ou à la mémoire de travail (RAM), pour la réception et/ou la transmission de données d'évaluation.

5. Système d'évaluation selon une des revendications précédentes, dans lequel au moins une des interfaces (70, 72, 74, 78, 80) comporte un élément de raccordement pour un raccord à fiche.

6. Système d'évaluation selon une des revendications précédentes, dans lequel les unités d'évaluation (64; 88) sont réalisées de manière identique à part le code de programme y étant mémorisé.

7. Système d'évaluation selon une des revendications précédentes, dans lequel la deuxième interface (72) est conçue pour la réception d'une partie du flux de données de capteur ou d'un autre flux de données de capteur, et l'équipement de transfert (FPGA B; FPGA_B') peut être commandé ou programmé de telle façon que des données de capteur reçues par l'intermédiaire de la deuxième interface (72) sont au moins partiellement transférée au processeur (CPU) et/ou dans la mémoire de travail (RAM) pour mémorisation.

8. Système de capteur destiné à l'examen de documents de valeur (12), ayant un capteur (40, 42, 44) pour la saisie de propriétés physiques des documents de valeur (12) et pour la constitution d'un flux de données de capteur qui décrivent les propriétés physiques des documents de valeur (12), et ayant un système d'évaluation (46) selon une des revendications précédentes dans lequel le capteur (40, 42, 44), pour la transmission du flux de données de capteur, est relié à la première interface (70) d'une première des unités d'évaluation (64; 88), et la première interface (70) de respectivement une des autres unités d'évaluation (64; 88) est reliée à une deuxième interface (72) d'une autre des unités d'évaluation (64; 88).

9. Système de capteur selon la revendication 8, dans lequel au moins deux des unités d'évaluation (64; 88) sont conçues, de préférence programmées, de telle façon que ces dernières, lors de l'évaluation, déterminent sur la base des données de capteur du flux de données de capteur respectivement une autre propriété de document de valeur, cependant que les propriétés de document de valeur sont de préférence choisies parmi le groupe degré de salissure, détérioration, authenticité et identifiant du document de valeur.

10. Système de capteur selon une des revendications 8 ou 9, dans lequel le système d'évaluation (46) comporte au total N groupes partiels ayant respectivement au moins une unité d'évaluation (64; 88), et dans lequel le flux de données de capteur comporte les unes après les autres des données de capteur pour des documents de valeur (12) se succédant,
dans lequel les unités d'évaluation (64; 88) sont conçues de telle façon que les données de capteur pour un document de valeur (12) sont évaluées par des unités d'évaluation (64; 88) de respectivement seulement un groupe partiel, et, de préférence, chaque groupe partiel évalue les données de capteur pour des documents de valeur (12) espacés de respectivement N documents de valeur.

11. Système de capteur destiné à la saisie de propriétés physiques d'un document de valeur (12), ayant
un premier capteur (40, 42, 44) pour la saisie de premières propriétés physiques du document de valeur,
un deuxième capteur (40, 42, 44) pour la saisie de deuxièmes propriétés physiques du document de valeur, et
un système d'évaluation (46) selon une des revendications de 1 à 6 dans lequel la première interface (70) d'une première des unités d'évaluation (64; 88) est reliée au premier capteur (40, 42, 44) pour la transmission d'un premier flux de données de capteur contenant des premières données de capteur du premier capteur (40, 42, 44), et la première interface (70) d'une deuxième des unités d'évaluation (64; 88) est reliée au deuxième capteur (40, 42, 44) pour la transmission d'un deuxième flux de données de capteur contenant des deuxièmes données de capteur du deuxième capteur (40, 42, 44), et au moins la première unité d'évaluation (64; 88) est conçue pour l'évaluation au moins partielle des données de capteur du premier capteur (40, 42, 44), et au moins la deuxième unité d'évaluation (64; 88) est conçue pour l'évaluation au moins partielle des données de capteur du deuxième capteur (40, 42, 44).

12. Système de capteur selon la revendication 11, dans lequel les premières propriétés physiques sont des propriétés physiques prédéterminées sur une première face du document de valeur (12), et les deuxièmes propriétés physiques sont les propriétés physiques prédéterminées sur une deuxième face, opposée à la première face du document de valeur (12).

13. Système de capteur selon la revendication 11 ou 12, lequel comporte deux systèmes partiels (58, 60) dont un premier système partiel (58) comprend la première des unités d'évaluation (64; 88) et un deuxième système partiel (60) comprend la deuxième des unités d'évaluation (64; 88), cependant qu'au moins un des systèmes partiels comprend au moins une autre unité d'évaluation (64; 88) dont la troisième interface (74) est reliée au bus de données (84) et dont la première interface (70) est reliée à la deuxième interface (72) d'une autre ou de l'autre unité d'évaluation (64; 88) du même système partiel.

14. Système de capteur selon une des revendications de 11 à 13, dans lequel le système d'évaluation (46) est réalisé suivant la revendication 7, et une deuxième interface (72) d'une unité d'évaluation (64; 88) du premier système partiel (58) est reliée à une deuxième interface (72) d'une unité d'évaluation (64; 88) du deuxième système partiel (60), cependant que l'équipement de transfert (FPGA B; FPGA_B') de l'unité d'évaluation (64; 88) du deuxième système partiel (60) est conçu pour le transfert de données de capteur reçues de la part de la première interface (70) au processeur (CPU) et/ou pour la mémorisation d'au moins une partie des données de capteur du flux de données de capteur dans la mémoire de travail (CPU) de la même unité d'évaluation (64; 88).

15. Système de capteur selon une des revendications de 8 à 14, dans lequel au moins une des unités d'évaluation (64; 88) et au moins une autre des unités d'évaluation (64; 88) sont programmées de telle façon que la au moins autre des unités d'évaluation (64; 88) reçoit des données d'évaluation de l'autre des unités d'évaluation (64; 88) par l'intermédiaire du bus de données (84).

16. Système de capteur selon une des revendications de 8 à 15, dans lequel au moins une des unités d'évaluation (64; 88) et au moins une autre des unités d'évaluation (64; 88) sont reliées par l'intermédiaire des cinquièmes interfaces (78, 80) et programmées de telle façon que la au moins autre des unités d'évaluation (64; 88) reçoit des données d'évaluation de l'autre des unités d'évaluation (64; 88) par l'intermédiaire des cinquièmes interfaces (78, 80).

17. Système de capteur selon une des revendications de 8 à 13 ou 15 ou 16, lequel comporte un autre capteur (40, 42, 44) pour la saisie d'autres propriétés physiques du document de valeur et dans lequel le système d'évaluation (46) est réalisé selon la revendication 7 et l'autre capteur (40, 42, 44) est relié à la deuxième interface (72) d'une unité d'évaluation (64; 88), cependant que l'équipement de transfert (FPGA B; FPGA_B') de l'unité d'évaluation (64; 88) est conçu pour le transfert de données de capteur reçues de la part de la première interface (70) au processeur (CPU) et/ou pour la mémorisation d'au moins une partie des données de capteur du flux de données de capteur dans la mémoire de travail (CPU) de la même unité d'évaluation (64; 88).

18. Dispositif de traitement de documents de valeur (12), ayant
un équipement d'alimentation (14) pour l' alimentation en documents de valeur (12) déliassés,
un équipement de délivrance (16) pour la réception de documents de valeur (12) traités, un équipement de transport (18) pour le transport, le long d'un chemin de transport (36), de documents de valeur (12) déliassés, acheminés par l'équipement d'alimentation (14), de l'équipement d'alimentation (14) à l'équipement de délivrance (16), et
un système de capteur (45) selon une des revendications de 8 à 17, dont le capteur ou les capteurs (40, 42, 44) sont agencés au chemin de transport et qui est conçu pour saisir un flux de données de capteur pour des documents de valeur (12) transportés en passant par le système de capteur (45).

19. Procédé d'évaluation d'un flux de données de capteur au moyen d'un système d'évaluation d'un flux de données de capteur selon une des revendications de 1 à 7, dans lequel
des données de capteur du premier des capteurs (40, 42, 44) pour un document de valeur (12) et des données de capteur du deuxième des capteurs (40, 42, 44) pour le document de valeur (12) sont évaluées au moins partiellement parallèlement dans différentes unités d'évaluation (64; 88), cependant que, de préférence, les données de capteur du premier capteur (40, 42, 44) comprennent des données de capteur pour des propriétés physiques sur une première face du document de valeur (12), et les données de capteur du deuxième capteur (40, 42, 44) comprennent des données de capteur pour des propriétés physiques sur une deuxième face du document de valeur (12), opposée à la première face,
cependant que les unités d'évaluation (64; 88) évaluent au moins partiellement parallèlement des données de capteur pour le même document de valeur (12).

20. Procédé d'évaluation d'un flux de données de capteur au moyen d'un système d'évaluation d'un flux de données de capteur selon une des revendications de 1 à 7, dans lequel le flux de données de capteur est reçu au moyen d'une première des unités d'évaluation (64; 88) et le flux de données de capteur reçu est d'une part au moins partiellement transféré à une deuxième des unités d'évaluation (64; 88) et d'autre part évalué au moins partiellement dans la première unité d'évaluation (64; 88), et la deuxième unité d'évaluation (64; 88) évalue au moins partiellement parallèlement à l'évaluation du flux de données de capteur dans la première unité d'évaluation (64; 88) le flux de données de capteur qui lui a été au moins partiellement transféré.

21. Procédé selon la revendication 20, dans lequel la première unité d'évaluation (64; 88) détermine lors de l'évaluation une première propriété d'un document de valeur (12) et la deuxième unité d'évaluation (64; 88) détermine lors de l'évaluation une deuxième propriété du document de valeur (12), différente de la première, cependant que les propriétés de document de valeur sont de préférence choisies parmi le groupe degré de salissure, détérioration, authenticité et identifiant du document de valeur.

22. Procédé selon une des revendications de 20 à 21, dans lequel les unités d'évaluation (64; 88) évaluent au moins partiellement parallèlement des données de capteur pour le même document de valeur (12).

23. Procédé selon une des revendications de 19 à 22, dans lequel une deuxième des unités d'évaluation obtient, et utilise lors de l'évaluation, des données d'évaluation d'une première des unités d'évaluation (64; 88). valeur (12).

24. Procédé selon une des revendications 20 ou 21, dans lequel, au moins partiellement parallèlement l'une à l'autre, une des unités d'évaluation évalue des données de capteur pour un premier document de valeur (12), et une autre des unités d'évaluation évalue des données de capteur pour un document de valeur succédant au premier document de valeur.
